# EUROPEAN PATENT APPLICATION

(11) **EP 4 734 610 A1**
(43) Date of publication of application: **29.04.2026**
(21) Application number: 24830777.9
(22) Date of filing: 25.06.2024
(51) Int. Cl.: H04W 36/30

(54) **DATA TRANSMISSION METHOD AND APPARATUS, DATA CHANNEL SWITCHING METHOD AND APPARATUS, AND VEHICLE, DEVICE AND MEDIUM**

(30) Priority: 26.06.2023 CN 202310760297; 26.06.2023 CN 202310760372; 28.06.2023 CN 202310776997
(71) Applicant: Beijing Co Wheels Technology Co., Ltd, Beijing 101300 (CN)
(72) Inventor: HUANG, Guojiang, Beijing 101300 (CN); SHEN, Zhuoli, Beijing 101300 (CN); LIANG, Chunyan, Beijing 101300 (CN); ZHANG, Dawei, Beijing 101300 (CN); LI, Juan, Beijing 101300 (CN)
(74) Representative: 2SPL Patentanwälte PartG mbB
(86) International application number: PCT/CN2024/101438
(87) International publication number: WO 2025/002137

(57) **Abstract**

The present disclosure relates to a data transmission method and apparatus, a data channel switching method and apparatus, and a vehicle, a device and a medium. The data transmission method comprises: separately creating radio bearer links on the basis of a preset number of subscriber identity modules; according to the service type of data to be sent, offloading said data onto a corresponding radio bearer link, and acquiring a real-time bearer bandwidth of each radio bearer link; on the basis of the real-time bearer bandwidth of each radio bearer link and a preset offloading condition, determining whether to execute data offloading; and when it is determined that data offloading is to be executed, dynamically adjusting a target radio bearer link according to the real-time bearer bandwidth of each radio bearer link. A real-time bearer bandwidth of each radio bearer link is monitored, and according to a preset offloading condition, offloading is performed in a timely manner on a radio bearer link that meets the offloading condition, such that the situation of nonuniform distribution of bearer bandwidths is avoided, thereby improving the efficiency and quality of data transmission, and thus improving the stability of network connection and user experience.

## Description

### CROSS-REFERENCE TO RELATED APPLICATION

This application claims priority to Chinese patent application No. 202310776997.9, entitled "DATA CHANNEL SWITCHING METHOD AND APPARATUS, AND ELECTRONIC DEVICE", filed on June 28, 2023 before the CNIPA, China National Intellectual Property Administration, Chinese patent application No. 202310760297.0, entitled "DATA TRANSMISSION METHOD AND APPARATUS FOR DUAL-CHANNEL NETWORK, VEHICLE, AND ELECTRONIC DEVICE", filed on June 26, 2023 before the CNIPA, and Chinese patent application No. 202310760372.3, entitled "DATA TRANSMISSION METHOD AND APPARATUS FOR MULTI-CHANNEL NETWORK, ELECTRONIC DEVICE, AND STORAGE MEDIUM", filed on June 26, 2023 before the CNIPA, which are incorporated herein in their entireties by reference.

### TECHNICAL FIELD

This application relates to the field of wireless communication, and in particular to a data channel switching method, a data transmission method and apparatus for a MULTI-CHANNEL network, an electronic device, and a storage medium.

### BACKGROUND

With the development of wireless communication technology, people are becoming increasingly reliant on wireless terminals. Among the wireless terminals, dual-SIM dual-active mobile terminals bring great convenience to users, and a sales proportion of the dual-SIM dual-active mobile terminals in the market is also constantly increasing. The dual-SIM dual-active mobile terminal may be internally provided with two independent card slots, namely, for a Subscriber Identity Module (SIM) or a Universal Subscriber Identity Module (USIM). The dual-SIM dual-active mobile terminal generally incorporate two sets of baseband processors, which enables the SIM and the USIM to operate simultaneously.

Some mobile devices support dual-SIM dual-active, that is, the mobile devices may have two built-in Subscriber Identity Modules (SIMs), when such a mobile terminal supporting dual-SIM dual-active is used for data transmission, two radio bearer links are used for receiving and transmitting data. This approach may lead to uneven distribution of radio bearers, and the radio bearer link with a relatively heavy load may have a limited bandwidth, which may result in a lower data transmission speed and increased latency, thereby affecting the stability of network connection and user experience.

In addition, some mobile devices support dual-SIM dual-active, that is, the mobile devices may have two built-in Subscriber Identity Modules (SIMs), when such a mobile terminal supporting dual-SIM dual-active is used for data transmission, usually only the radio bearer link of one SIM is configured for data receiving and transmitting to save configuration costs and control costs. However, performing the data receiving and transmitting through the radio bearer link of one SIM may lead to limited uplink and downlink bandwidth resources and relatively low data transmission performance.

Furthermore, the two SIMs of the dual-SIM dual-active mobile terminal include a primary SIM and a secondary SIM. When a user makes a call or surfs the Internet by using the dual-SIM dual-active mobile terminal, the primary SIM is selected by default to bear network services. In the related art, when switching network data between the primary and secondary SIMs, a client is allowed to attempt to re-register a network and dial only after a mobile network of the primary SIM is disconnected or connection of a Packet Data Network (PDN) is interrupted, and a channel switching process is triggered only after the attempt fails, which results in a low switching speed of network data channels of the primary and secondary SIMs due to untimely network monitoring, thereby reducing the use experience of the user.

### SUMMARY

In view of this, the present disclosure provides a data transmission method for a multi-channel network, a data channel switching method and apparatus, and an electronic device, for the main purpose of ameliorating the problems in the related art that distribution of radio bearers is uneven, and one radio bearer link with a relatively heavy load may have a limited bandwidth, which may result in a lower data transmission speed and increased latency, thereby affecting the stability of network connection and user experience.

A first aspect of the present disclosure provides a data transmission method for a multi-channel network, including:
creating radio bearer links individually based on a preset quantity of subscriber identity modules, where each subscriber identity module corresponds to one of the radio bearer links;
allocating to-be-sent data to a corresponding radio bearer link according to a service type of the to-be-sent data, and acquiring a real-time bearer bandwidth of each of the radio bearer links;
determining whether to execute data distribution based on the real-time bearer bandwidth of each radio bearer link and a preset distributing condition; and
dynamically adjusting a target radio bearer link according to the real-time bearer bandwidth of each of the radio bearer links in response to determining to execute data distribution.

According to a second aspect of the present disclosure, a data channel switching method is provided, including:
acquiring multiple pieces of channel information of a current data channel, the current data channel is a channel that is currently used for data communication between a host computer system and a server;
monitoring the multiple pieces of channel information based on an abnormal state detection strategy, and obtaining multiple monitoring results corresponding to the multiple pieces of channel information, where the abnormal state detection strategy includes at least one abnormal state detection strategy for network layer data transmission and at least one abnormal state detection strategy for radio network signal quality;
deciding that a communication state of the current data channel is abnormal in response to a preset quantity of monitoring results among the multiple monitoring results being abnormal; and
switching the current data channel to a backup data channel in response to the communication state of the current data channel being abnormal, where the backup data channel is a channel between the host computer system and the server for which data communication is to be established.

According to a third aspect of the present disclosure, a data transmission apparatus for a multi-channel network is provided, including:
a second creation unit configured for creating radio bearer links individually based on a preset quantity of subscriber identity modules; where each of the subscriber identity modules corresponds to one of the radio bearer links;
a second allocation unit configured for allocating to-be-sent data to a corresponding radio bearer link according to a service type of the to-be-sent data, and acquiring a real-time bearer bandwidth of each of the radio bearer links;
a second decision unit configured for determining whether to execute data distribution based on the real-time bearer bandwidth of each of the radio bearer links and a preset distributing condition; and
an adjustment unit configured for: in response to deciding to execute data distribution, dynamically adjusting a target radio bearer link according to the real-time bearer bandwidth of each of the radio bearer links.

According to a fourth aspect of the present disclosure, a system is provided, including a baseband, at least one host computer, and a switch,
the host computer is configured for generating to-be-sent data and transmitting the to-be-sent data to the switch; where the to-be-sent data is generated by each application in the host computer;
the switch is configured for receiving the to-be-sent data sent by each host computer and transmitting the to-be-sent data to the baseband; and
the baseband is configured for receiving the to-be-sent data sent by the switch, and determining a target radio bearer link for transmitting the to-be-sent data according to a type identifier of the to-be-sent data and a preset forwarding strategy; where a corresponding relationship between the type identifier and the radio bearer link is recorded in the preset forwarding strategy, and the radio bearer links include two radio bearer links in the dual-channel network; and transmitting the to-be-sent data to a corresponding target address based on the target radio bearer link.

According to a fifth aspect of the present disclosure, a data channel switching apparatus is provided, including:
an acquisition module configured for acquiring multiple pieces of channel information of a current data channel, where the current data channel is a channel that is currently used for data communication between a host computer system and a server;
a monitoring module configured for monitoring the multiple pieces of channel information based on an abnormal state detection strategy, and obtaining multiple monitoring results corresponding to the multiple pieces of channel information, where the abnormal state detection strategy includes at least one abnormal state detection strategy for network layer data transmission and at least one abnormal state detection strategy for radio network signal quality;
a first decision module configured for deciding that a communication state of the current data channel is abnormal in response to a preset quantity of monitoring results among multiple monitoring results being abnormal; and
a switching module configured for switching the current data channel to a backup data channel in response to the communication state of the current data channel being abnormal, where the backup data channel is a channel between the host computer system and the server for which data communication is to be established.

According to a sixth aspect of the present disclosure, a vehicle is provided, including the data transmission apparatus for a multi-channel network according to the first aspect, or the data channel switching apparatus according to the second aspect.

According to a seventh aspect of the present disclosure, a computer-readable storage medium is provided, having a computer program stored thereon, wherein the computer program, when executed by a processor, implements the method according to the first aspect or the second aspect.

According to an eighth aspect of the present disclosure, an electronic device is provided, including a storage medium, a processor, and a computer program stored on the storage medium and runnable on the processor, wherein the processor, when executing the computer program, implements the method according to the first aspect or the second aspect.

According to a ninth aspect of the present disclosure, a computer program product is provided, including a computer program, wherein the computer program, when executed by a processor, implements the method according to the first aspect or the second aspect.

The main technical solutions of the data transmission method and apparatus for the multi-channel network, the electronic device, and the storage medium provided by the present disclosure include: firstly, creating radio bearer links individually based on a preset quantity of subscriber identity modules; where each of the subscriber identity modules corresponds to one of the radio bearer links; allocating to-be-sent data to a corresponding radio bearer link according to a service type of the to-be-sent data, and acquiring a real-time bearer bandwidth of each radio bearer link; secondly, determining whether to execute data distribution based on the real-time bearer bandwidth of each radio bearer link and a preset distributing condition; and finally, when it is decided to execute data distribution, dynamically adjusting a target radio bearer link according to the real-time bearer bandwidth of each radio bearer link. Compared with the related art, in the embodiment of the present disclosure, by monitoring the real-time bearer bandwidth of each radio bearer link and performing data distribution for the radio bearer links meeting the distributing condition according to the preset distributing condition in a timely manner, the situation of nonuniform distribution of bearer bandwidths is avoided, thereby improving the efficiency and quality of data transmission, and thus improving the stability of network connection and user experience.

The target radio bearer link for transmitting the to-be-sent data is determined according to a type identifier of the to-be-sent data and the preset forwarding strategy; a corresponding relationship between the type identifier and the radio bearer link is recorded in the preset forwarding strategy, and the radio bearer links include two radio bearer links in the dual-channel network; and the to-be-sent data is sent to a corresponding target address based on the target radio bearer link. Compared with the related art, the radio bearer links in the embodiment of the present disclosure include two radio bearer links in the dual-channel network, the radio bearer link corresponding to the to-be-sent data is determined according to the preset forwarding strategy before data transmission, and the to-be-sent data is transmitted according to the determined corresponding radio bearer link. The data is transmitted through two radio bearer links, thereby supporting parallel transmission of the data in the dual-channel network, with relatively large uplink and downlink bandwidths and high data transmission performance.

By virtue of the above technical solutions, the data channel switching method and apparatus, and the electronic device provided by the present disclosure may achieve rapid switching of data channels and ameliorate the problem of a network lag caused by a lowered network speed compared with the related art. Specifically, multiple pieces of channel information of a current data channel may be acquired first, wherein the current data channel is a channel that is currently used for data communication between a host computer system and a server; the multiple pieces of channel information are monitored based on an abnormal state detection strategy to obtain multiple monitoring results corresponding to the multiple pieces of channel information, wherein the abnormal state detection strategy includes at least one abnormal state detection strategy for network layer data transmission and at least one abnormal state detection strategy for radio network signal quality; a first decision module is configured for deciding that a communication state of the current data channel is abnormal if a preset quantity of monitoring results in multiple monitoring results are abnormal; and the current data channel is switched to a backup data channel if the communication state of the current data channel is abnormal, wherein the backup data channel is a channel between the host computer system and the server for which data communication is to be established. By applying the technical solutions of the present disclosure, network monitoring for the current data channel is achieved, and when it is decided that the communication state of the current data channel is abnormal, the current data channel is switched to the backup data channel. Compared with the previous passive waiting for connection or disconnection of a wireless power distribution network, an active probing and abnormality decision solution is provided, which greatly shortens the abnormality discovery time and improves the use experience of a user.

It should be understood that the content described in this section is not intended to identify key or important features of the examples of the present disclosure, and is also not intended to limit the scope of the present disclosure. Other features of the present disclosure will be readily understood from the following description.

### BRIEF DESCRIPTION OF THE DRAWINGS

In order to more clearly illustrate the technical solutions in the examples of the present disclosure or in the related art, the accompanying drawings required to be used in describing the examples or the related art will be briefly introduced below. It is apparent that for those ordinarily skilled in the art, other drawings may be also obtained according to these drawings without any creative effort.
FIG. 1 is a schematic flow diagram of a data channel switching method provided by an embodiment of the present disclosure;
FIG. 2 is a schematic flow diagram of another data channel switching method provided by an embodiment of the present disclosure;
FIG. 3 is a system framework diagram of the data channel switching method provided by an embodiment of the present disclosure;
FIG. 4 is a schematic timing sequence diagram of the data channel switching method provided by an embodiment of the present disclosure;
FIG. 5 is a schematic structural diagram of a data channel switching apparatus provided by an embodiment of the present disclosure;
FIG. 6 is a schematic flow diagram of a data transmission method for a dual-channel network provided by an embodiment of the present disclosure;
FIG. 7 is a framework diagram of a communication system provided by an embodiment of the present disclosure;
FIG. 8 is a schematic flow diagram of another data transmission method for a dual-channel network provided by an embodiment of the present disclosure;
FIG. 9 is a schematic flow diagram of another data transmission method for a dual-channel network provided by an embodiment of the present disclosure;
FIG. 10 is a schematic structural diagram of a data transmission system for a dual-channel network provided by an embodiment of the present disclosure;
FIG. 11 is a schematic structural diagram of a data transmission apparatus for a dual-channel network provided by an embodiment of the present disclosure;
FIG. 12 is a schematic structural diagram of another data transmission apparatus for a dual-channel network provided by an embodiment of the present disclosure;
FIG. 13 is a schematic flow diagram of a data transmission method for a multi-channel network provided by an embodiment of the present disclosure;
FIG. 14 is a schematic flow diagram of another data transmission method for a multi-channel network provided by an embodiment of the present disclosure;
FIG. 15 is a schematic flow diagram of another data transmission method for a multi-channel network provided by an embodiment of the present disclosure;
FIG. 16 is a schematic structural diagram of a data transmission apparatus for a multi-channel network provided by an embodiment of the present disclosure;
FIG. 17 is a schematic structural diagram of another data transmission apparatus for a multi-channel network provided by an embodiment of the present disclosure; and
FIG. 18 is a schematic block diagram of an exemplary electronic device provided by an embodiment of the present disclosure.

### DETAILED DESCRIPTION

In the description of the present disclosure, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise" and the like indicate orientations or positional relationships based on the orientations or positional relationships shown in the drawings, which are only for the convenience of describing the present disclosure and simplifying the description, do not indicate or imply that the apparatus or element referred to must have a specific orientation, be constructed and operated in a specific orientation, and thus cannot be understood as a limitation on the present disclosure.

In addition, the terms "first" and "second" are only used for descriptive purposes, and cannot be understood as indicating or implying relative importance or implicitly indicating a quantity of indicated technical features. Thus, the features defined with "first" and "second" may explicitly or implicitly include one or more of these features. In the description of the present disclosure, the meaning of "multiple" is two or more, unless otherwise clearly and specifically defined.

In the present disclosure, unless otherwise clearly specified and defined, the terms "installed", "connected to", "connected", "fixed" and the like should be understood in a broad sense, for example, it may be fixed connection, detachable connection, or integral connection; it may be mechanical connection or electrical connection; and it may be direct connection or indirect connection through an intermediate medium, and it may be internal communication of two elements. For those ordinarily skilled in the art, the specific meanings of the above terms in the present disclosure may be understood according to specific situations.

In order to more clearly understand the above objects, features and advantages of the present disclosure, the solutions of the present disclosure will be further described below. It should be noted that the embodiments of the present disclosure and the features in the embodiments may be combined with each other without conflict.

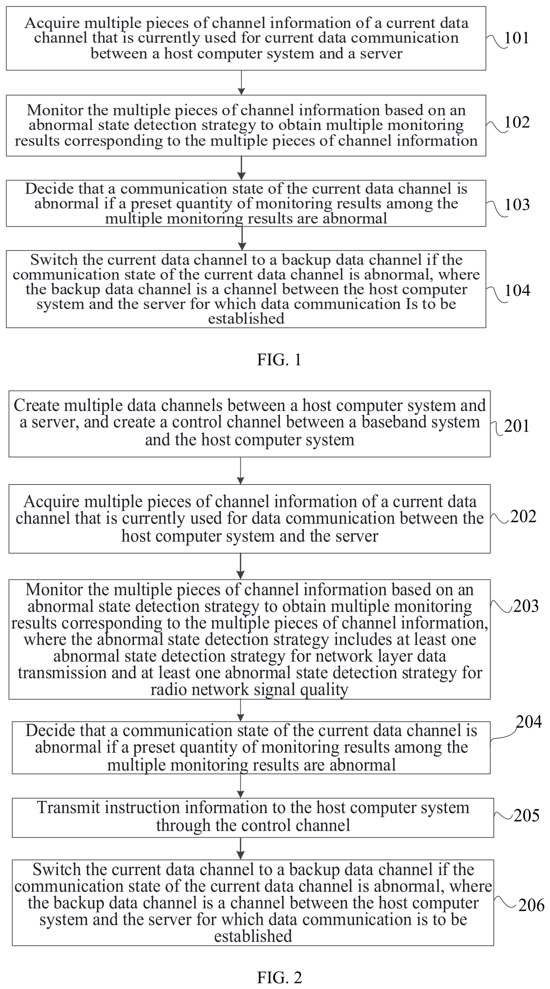

In order to ameliorate the technical problem in the related art that a switching speed of network data channels of primary and secondary SIMs is slow due to untimely network monitoring, thereby reducing the use experience of a user, an embodiment of the present disclosure provides a data channel switching method. As shown in FIG. 1, the method includes steps described below.

At step 101, multiple pieces of channel information of a current data channel are acquired, where the current data channel is a channel that is currently used for data communication between a host computer system and a server.

In the embodiment of the present disclosure, the host computer system may be a computer or a single-chip microcomputer that can send operation instructions directly, such as a computer, a mobile phone, a tablet, a panel, and a touch screen. The host computer system is responsible for service logic, and is used to provide a user operation interaction interface and display feedback data to the user. In the embodiment of the present disclosure, a mobile phone is taken as an example of the host computer system to illustrate the technical solutions in the present disclosure, but this does not constitute a specific limitation on the technical solutions in the present disclosure. The host computer system may be a domain controller in a vehicle. For example, host computer system 1 is an extended domain control unit (XCU) that is served as a computing platform for control of multiple domains such as a vehicle power domain, a chassis domain, and a body domain, and integrated with control and computing functions in the fields such as vehicles, battery systems, vehicle gateways, and bodies. Host computer system 2 is a Head Unit (HU) that is served as a cockpit domain controller and is an in-vehicle infotainment system. The host computer system is an Autonomous Driving Control Unit (ADCU) or a Full-Self Driving (FSD) domain controller.

In the embodiment of the present disclosure, the host computer system may remotely access and connect to the server through a data channel between the host computer system and the server. The server may provide an access interface so that a data channel is established between the host computer system and the server. Data communication may be performed between the host computer system and the server through the data channel, and channel information may be transferred between the host computer system and the server. The channel information is information transferred in the data channel, which may include image information, audio information, signal data, and the like, which is not specifically limited here.

An execution subject of the embodiment of the present disclosure may be a baseband system. The baseband system is used to provide network access capabilities and data channels. The baseband system may establish a radio network data channel with a network operator by registering a network, and acquire the network operator's network and bearer information through the radio network data channel, where the bearer information may include IP addresses, which is not specifically limited here. The network operator may access the server through a specific data channel. The baseband system transfers the network and bearer information to the host computer system through a data channel between the baseband system and the host computer system. The baseband system receives the network and bearer information, completes initialization, and transfers the network and bearer information to the host computer system through a control channel between the baseband system and the host computer system. The host computer system may connect to the network operator through the data channel between the host computer system and the baseband system and the radio network data channel between the baseband system and the network operator, and further utilize a specific data channel of the network operator to perform data connection and data interaction with the server.

At step 102, the multiple pieces of channel information are monitored based on an abnormal state detection strategy, and multiple monitoring results corresponding to the multiple pieces of channel information are obtained.

The abnormal state detection strategy includes at least one abnormal state detection strategy for network layer data transmission and at least one abnormal state detection strategy for radio network signal quality. The abnormal state detection strategy is used to determine whether a current data channel can normally transmit data, and the abnormal state detection strategy may include various detection strategies for determining whether a communication state of the current data channel is abnormal, which is not limited here. The abnormal state detection strategy may include but is not limited to: a latency, a packet loss rate and a success rate of data transmission, and a radio network signal measurement value. Exemplarily, the abnormal state detection strategy may be monitoring a proportion of positive feedback messages in the current data channel. If the proportion of positive feedback messages is less than a preset message ratio, it indicates that transmission of the current data channel is abnormal, where a positive feedback message is an Acknowledgement (Ack) message. After receiving data, a receiving party replies the positive feedback message to a transmitting party to inform the transmitting party that the data has been received. The preset message ratio is a proportion value which may be preset according to actual situations. The abnormal state is a communication state where network signal strength is less than a preset strength threshold, and the preset strength threshold is a preset network signal strength value capable of ensuring that the user does not experience lag during a using process. In the embodiment of the present disclosure, through the abnormal state detection strategies in two dimensions (network layer (IP) data transmission and radio network signal quality), multiple channel indicator data are monitored in parallel simultaneously and comprehensively decided, which may achieve precise monitoring of network abnormalities of the data channel and rapid switching of the data channel.

At step 103, a communication state of the current data channel is decided as an abnormal state when a preset quantity of monitoring results among the monitoring results are abnormal.

In the embodiment of the present disclosure, when performing network monitoring on the latency, the packet loss rate and the success rate of data transmission, and the radio network signal measurement value, if a preset quantity of monitoring results are abnormal, it is decided that the communication state of the current data channel is abnormal. The preset quantity may be preset according to actual situations, for example, it may be but is not limited to 2, 3, 4, and the like, which is not limited here. If it is decided that the communication state of the current data channel is abnormal according to the abnormal state detection strategy, that is, when it is detected that current network signal strength is less than the preset strength threshold during a transmission process of channel information through the current data channel, it proves that the current network signal quality is degraded. In order to avoid a phenomenon of lag during the using process of the mobile phone by the user due to a lowered network speed, in the embodiment of the present disclosure, the current data channel may be switched to a backup data channel when detecting that the network signal strength is less than the preset strength threshold. Specifically, the process shown in step 103 may be executed to ensure the user experience during the using process.

At step 104, the current data channel is switched to a backup data channel when the communication state of the current data channel is abnormal. The backup data channel is a channel between the host computer system and the server for which data communication is to be established.

In the embodiment of the present disclosure, a separate system is mainly used to perform channel switching on the current data channel. The separate system includes a baseband system (Modem) and a host computer system (Host). The baseband system provides network access capabilities and data channels, and the host computer system is responsible for service logic. This solution defines a dual-system collaboration solution when an abnormality occurs to achieve rapid switching, which may be applied to various operating systems. This solution also takes into account the hierarchical division of basic software, the principles of high cohesion and low coupling in module design, and the like. Compared with the existing solution of passively waiting for connection or disconnection of a wireless power distribution network, an active detection and abnormality decision solution is provided, which greatly shortens the abnormality discovery time. Furthermore, this solution enables data channel switching at millisecond-level speeds. The host computer may support dual-SIM dual-active. The dual-SIM dual-active means the capability of supporting two SIMs (a primary SIM and a secondary SIM) in simultaneously establishing data channels with a server. By default, the data channel of the primary SIM is selected to carry network services. When the network signal quality of the primary SIM degrades, the system will automatically switch to the backup data channel of the secondary SIM, thereby reducing the phenomenon of lag caused by a lowered network speed during the using process of the user and improving the use experience of the user.

In summary, compared with the related art, the data channel switching method provided by the present disclosure may achieve rapid switching of data channels and ameliorate the problem of network lag caused by the lowered network speed. Specifically, multiple pieces of channel information of the current data channel may be acquired first, wherein the current data channel is a channel that is currently used for data communication between a host computer system and a server; the multiple pieces of channel information are monitored based on an abnormal state detection strategy to obtain multiple monitoring results corresponding to the multiple pieces of channel information, wherein the abnormal state detection strategy includes at least one abnormal state detection strategy for network layer data transmission and at least one abnormal state detection strategy for radio network signal quality; a first decision module is configured to decide that a communication state of the current data channel is abnormal when a preset quantity of monitoring results among the monitoring results are abnormal; and the current data channel is switched to a backup data channel when the communication state of the current data channel is abnormal, wherein the backup data channel is a channel between the host computer system and the server for which data communication is to be established. By applying the technical solutions of the present disclosure, network monitoring for the current data channel is achieved, and when it is determined that the communication state of the current data channel is abnormal, the current data channel is switched to the backup data channel. Compared with the previous solution of passively waiting for connection or disconnection of a wireless power distribution network, an active detection and abnormality decision solution is provided, which greatly shortens the abnormality discovery time and improves the use experience of a user.

Further, as a refinement and extension of the above embodiment, in order to completely illustrate the specific implementation process of the method in the embodiment of the present disclosure, an embodiment of the present disclosure provides a specific method as shown in FIG. 2, and the method includes steps described below.

At step 201, multiple data channels are created between a host computer system and a server, and a control channel is created between a baseband system and the host computer system .

The multiple data channels are used for data communication between the host computer system and the server, and include one current data channel and at least one backup data channel. In the following steps of the embodiment of the present disclosure, the technical solutions of the present disclosure are illustrated by taking the case where multiple data channels includes one current data channel and one backup data channel as an example, but this does not constitute a specific limitation. The control channel is used by the baseband system to transmit indication information to the host system, which may convey various indications such as successful network connection, network connection failure, etc., which is not specifically limited here.

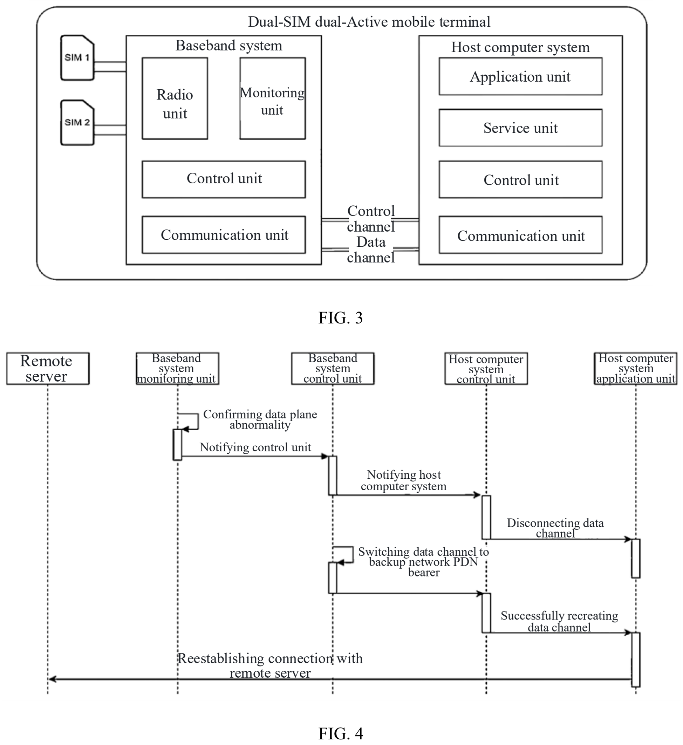

In this embodiment of the present disclosure, as shown in FIG. 3, the system architecture of a mainstream mobile terminal is divided into two parts: a baseband system and a host computer system. The baseband system includes: a radio unit, a monitoring unit, a control unit, and a communication unit. The radio unit includes network signal analysis and wireless data bearer management. The monitoring unit is responsible for monitoring network quality and data channel transmission quality. The control unit is responsible for data channel switching control and communication with the host computer based on control plane protocols. The communication unit is responsible for communication between the baseband system and the host computer system, which may include a control channel and a data channel. The host computer system includes: an application unit, a service unit, a control unit, and a communication unit. The application unit is responsible for client service logic processing and communication with a remote server. The service unit is used to provide system services required by an application layer unit upward, including command transmission and state reporting. The control unit is responsible for communication with the baseband system and internal control of the host computer. The communication unit is responsible for communication between the baseband system and the host computer system, including the control channel and the data channel.

In the embodiment of the present disclosure, when creating multiple data channels between the host computer system and the server, the baseband system, upon startup and completion of initialization, utilizes the radio unit thereof to register network communication functions for SIM1 and SIM2, and establishes radio network data channels between the SIM1/SIM2 and their respective network operators. The baseband system transfers channel information such as network information and bearer information carried in the radio network data channel to the host computer system through the control channel, and establishes data channels with the host computer system. The host computer system may perform data communication with the server through the data channels between the host computer system and the baseband system and the radio network data channel between the baseband system and the network operator, wherein the network operator may access the server through a specific data channel.

At step 202, multiple pieces of channel information of a current data channel are acquired, wherein the current data channel is a channel that is currently used for data communication between the host computer system and the server.

For the embodiment of the present disclosure, a specific implementation process may refer to the relevant description in step 101, which will not be repeated herein.

At step 203, the multiple pieces of channel information are monitored based on an abnormal state detection strategy to obtain multiple monitoring results corresponding to the multiple pieces of channel information. The abnormal state detection strategy includes at least one abnormal state detection strategy for network layer data transmission and at least one abnormal state detection strategy for radio network signal quality.

In the embodiment of the present disclosure, the monitoring unit in the baseband system is mainly utilized to monitor whether the current data channel meets the abnormal state detection strategy. In a specific application scenario, the monitoring unit may create a first monitoring thread to monitor a delivery time of network detection information sent to the server of the operator. If the delivery time exceeds a preset delivery time period of the network detection information, it indicates that transmission of the current data channel is abnormal. The network detection is a built-in function of the system. A network detection command is a command which may be used to check whether the network functions properly or to measure a network connection speed. By using the network detection command, a current network condition may be known through the delivery time of response information of the command. The first monitoring thread is a thread used to monitor the delivery time of the network detection information.

In a specific application scenario, the monitoring unit may create a second monitoring thread to monitor a loss ratio of the current data channel during a transmission process of channel information, monitor a negative feedback message ratio of the current data channel. If the negative feedback message ratio is greater than a preset message ratio, it indicates that transmission of the current data channel is abnormal. The negative feedback message is a Negative Acknowledgement (NACK) packet. When no data is received, the receiving party sends the NACK packet to the transmitting party to inform the transmitting party that no data has been received. The second monitoring thread is a thread used to monitor the loss ratio of the current data channel during the channel information transmission.

In a specific application scenario, the monitoring unit may create a third monitoring thread to monitor a transmission success rate of the current data channel during the channel information transmission. If the transmission success rate is less than a preset success rate, it indicates that transmission of the current data channel is abnormal. The preset success rate is a success value which may be preset according to actual situations. The third monitoring thread is a thread which may be used to monitor the transmission success rate of the current data channel during the channel information transmission.

In a specific application scenario, the monitoring unit may create a fourth monitoring thread to monitor a periodic radio network signal measurement value. The fourth monitoring thread is a thread used to monitor the radio network signal measurement value. Reference Signal Received Power (RSRP), Reference Signal Receiving Quality (RSRQ), a Received Signal Strength Indicator (RSSI), and a Signal to Interference plus Noise Ratio (SINR) of the radio network signal measurement value in the channel information are read, and compared with preset signal reference values, if at least one signal value is less than the preset signal reference value, it indicates that transmission of the current data channel is abnormal. The Reference Signal Received Power is an RSRP signal value, the Reference Signal Receiving Quality is an RSRQ signal value, the Received Signal Strength Indicator is an RSSI signal value, the Signal to Interference plus Noise Ratio is an SINR signal value, the preset signal reference value is a reference value of each signal value preset according to actual situations, which is not specifically limited here.

In the embodiment of the present disclosure, a specific implementation process of monitoring the multiple pieces of channel information based on the abnormal state detection strategy to obtain multiple monitoring results corresponding to the channel information may be described as follows: creating multiple monitoring threads corresponding to the abnormal state detection strategy respectively, monitoring the multiple pieces of channel information through the multiple monitoring threads, and obtaining multiple monitoring results corresponding to the multiple pieces of channel information. The multiple monitoring threads may include a first monitoring thread, a second monitoring thread, a third monitoring thread, and a fourth monitoring thread, or may also include other monitoring threads for detecting channel information, which is not specifically limited herein. In the case that the channel information includes the delivery time of the network detection information, the first monitoring thread may be utilized to monitor whether the delivery time exceeds the preset delivery time period of the network detection information to obtain a first monitoring result. The network detection information is used to characterize the transmission latency of the channel information during the transmission process. If the delivery time exceeds the preset delivery time period of the network detection information, the first monitoring result is abnormal; if the delivery time does not exceed the preset delivery time period of the network detection information, the first monitoring result is normal. In the case that the channel information includes the negative feedback message ratio, the second monitoring thread may be utilized to monitor whether the negative feedback message ratio is greater than the preset message ratio to obtain a second monitoring result. The negative feedback message ratio is used to characterize the loss ratio of the channel information during the transmission process. If the negative feedback message ratio is greater than the preset message ratio, the second monitoring result is abnormal; if the negative feedback message ratio is less than or equal to the preset message ratio, the second monitoring result is normal. In the case that the channel information includes the transmission success rate of the current data channel, the third monitoring thread may be utilized to monitor whether the transmission success rate is less than the preset success rate to obtain a third monitoring result. The transmission success rate is used to characterize the success proportion of the channel information during the transmission process. If the transmission success rate is less than the preset success rate, the third monitoring result is abnormal; if the transmission success rate is greater than or equal to the preset success rate, the third monitoring result is normal. In the case that the channel information includes the radio network signal measurement value, the fourth monitoring thread may be utilized to monitor whether the radio network signal measurement value is less than the corresponding preset signal reference value to obtain a fourth monitoring result. The radio network signal measurement value is used to characterize the quality of the radio network signal in the current data channel. The radio network signal measurement value includes at least one of: the reference signal received power, the reference signal receiving quality, the received signal strength indicator, and the signal to interference plus noise ratio. If the radio network signal measurement value is less than the corresponding preset signal reference value, the fourth monitoring result is abnormal; if the radio network signal measurement value is greater than or equal to the corresponding preset signal reference value, the fourth monitoring result is normal.

In the embodiment of the present disclosure, when monitoring the multiple pieces of channel information based on the abnormal state detection strategy, the monitoring threads corresponding to the abnormal state detection strategy are created and utilized to monitor different channel information in parallel, thereby automatically monitoring abnormalities of the data channel, and improving the monitoring efficiency and monitoring accuracy of abnormal states.

The present disclosure defines a dual-system collaboration solution in the event of an anomaly to achieve rapid switching, which may be applied to various operating systems. Moreover, abnormal events are monitored in two dimensions, that is, network layer (IP) data abnormalities and wireless signal quality abnormalities, and multiple indicator data are monitored in parallel for comprehensive decision, including: a throughput rate, latency, a packet loss rate, RSRP/RSRQ/RSSI/SINR, and the like, thereby shortening the abnormality discovery time and reducing a false decision rate.

At step 204, a communication state of the current data channel is decided as abnormal if a preset quantity of monitoring results among the multiple monitoring results are abnormal.

In the embodiment of the present disclosure, as a possible implementation method, when the monitoring result of any monitoring thread is abnormal, the other monitoring results monitored by other monitoring threads may be acquired. If at least one monitoring result in the other monitoring results is abnormal, it may be decided that the communication state of the current data channel is abnormal. That is, among multiple monitoring results corresponding to all the monitoring threads, if there are at least two abnormal monitoring results simultaneously, it is decided that the communication state of the current data channel is abnormal, which proves that the current network signal quality is relatively low.

At step 205, an instruction information is transmitted to the host computer system through the control channel.

In the embodiment of the present disclosure, when the monitoring unit of the baseband system confirms that the current data channel is in the abnormal state, as shown in FIG. 4, an abnormal signal for indicating that the current data channel is in the abnormal state is transmitted to the control unit of the baseband system from the monitoring unit of the baseband system. After receiving the abnormal signal, the control unit transmits instruction information for instructing the host computer system to interrupt the data connection with the server to the communication unit of the baseband system. After receiving the instruction information, the communication unit of the baseband system transmits the instruction information to the communication unit of the host computer system. The communication unit of the host computer system transmits the received instruction information to the control unit of the host computer system. The control unit of the host computer system controls the application unit of the host computer system to interrupt the data connection with the server, and an interruption signal is transmitted to the service unit, and the service unit is utilized to notify that the data connection of the application unit has been interrupted.

At step 206, the current data channel is switched to a backup data channel when the communication state of the current data channel is abnormal, wherein the backup data channel is a channel between the host computer system and the server for which data communication is to be established.

In the embodiment of the present disclosure, as shown in FIG. 4, after the current data channel is switched to the backup data channel, the control unit of the baseband system controls the communication unit of the baseband system to transmit a successful reestablishment signal used for indicating that the current data channel is the backup data channel to the communication unit of the host computer system through the control channel. The communication unit of the host computer system transmits the successful reestablishment signal to the control unit of the host computer system. After receiving the successful reestablishment signal, the control unit of the host computer system transmits the successful reestablishment signal to the service unit of the host computer system, and the service unit is utilized to notify the application unit to reestablish the connection with the server.

In summary, compared with the related art, the data channel switching method provided by the present disclosure may achieve rapid switching of data channels and ameliorate the problem of a network lag caused by the lowered network speed. Specifically, multiple pieces of channel information of a current data channel may be acquired first, wherein the current data channel is a channel that is currently used for data communication between the host computer system and the server; the multiple pieces of channel information are monitored based on an abnormal state detection strategy to obtain multiple monitoring results corresponding to the multiple pieces of channel information, wherein the abnormal state detection strategy includes at least one abnormal state detection strategy for network layer data transmission and at least one abnormal state detection strategy for radio network signal quality; a first decision module is configured for deciding that a communication state of the current data channel is abnormal if a preset quantity of monitoring results among multiple monitoring results are abnormal; and the current data channel is switched to a backup data channel if the communication state of the current data channel is abnormal, wherein the backup data channel is a channel between the host computer system and the server for which data communication is to be established. By applying the technical solutions of the present disclosure, network monitoring for the current data channel is achieved, and when it is determined that the communication state of the current data channel is abnormal, the current data channel is switched to the backup data channel. Compared with the previous solution of passively waiting for connection or disconnection of a wireless power distribution network, an active probing and abnormality decision solution is provided, which greatly shortens the abnormality discovery time and improves the use experience of a user.

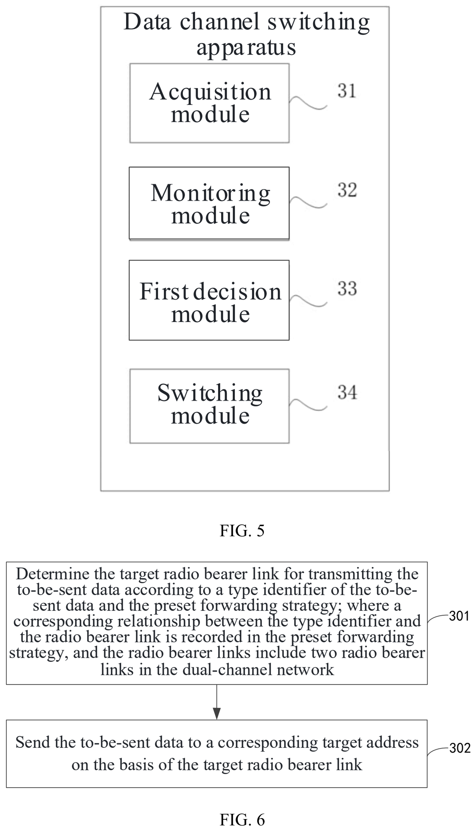

Based on the specific implementation of the methods shown in FIG. 1 and FIG. 2 above, an embodiment provides a data channel switching apparatus. As shown in FIG. 5, the apparatus includes: an acquisition module 31, a monitoring module 32, a first decision module 33, and a switching module 34.

The acquisition module 31 is configured for acquiring multiple pieces of channel information of a current data channel. The current data channel is a channel that is currently used for data communication between a host computer system and a server.

The monitoring module 32 is configured for monitoring the multiple pieces of channel information based on an abnormal state detection strategy, and obtaining multiple monitoring results corresponding to the multiple pieces of channel information. The abnormal state detection strategy includes at least one abnormal state detection strategy for network layer data transmission and at least one abnormal state detection strategy for radio network signal quality.

The first decision module 33 is configured for deciding that a communication state of the current data channel is abnormal when a preset quantity of monitoring results among the multiple monitoring results are abnormal.

The switching module 34 is configured for switching the current data channel to a backup data channel when the communication state of the current data channel is abnormal. The backup data channel is a channel between the host computer system and the server for which data communication is to be established.

In a specific application scenario, the monitoring module 32 is configured for creating multiple monitoring threads corresponding to the abnormal state detection strategy, and monitoring the multiple pieces of channel information through the multiple monitoring threads and obtaining multiple monitoring results corresponding to the multiple pieces of channel information. The first decision module 33 is configured for acquiring other monitoring results monitored by other monitoring threads when the monitoring result of any monitoring thread is abnormal; and deciding that the communication state of the current data channel is abnormal when at least one monitoring result among the other monitoring results is abnormal.

In a specific application scenario, the monitoring module 32 is configured for: when the channel information includes a delivery time of network detection information, monitoring whether the delivery time exceeds a preset delivery time period of the network detection information by utilizing a first monitoring thread, and obtaining a first monitoring result. The network detection information is used to characterize transmission latency of the channel information during a transmission process. When the delivery time exceeds the preset delivery time period of the network detection information, the first monitoring result is abnormal; when the delivery time does not exceed the preset delivery time period of the network detection information, the first monitoring result is normal. The monitoring module 32 is further configured for: when the channel information includes a negative feedback message ratio, monitoring whether the negative feedback message ratio is greater than a preset message ratio by utilizing a second monitoring thread, and obtaining a second monitoring result. The negative feedback message ratio is used to characterize a loss ratio of the channel information during the transmission process. When the negative feedback message ratio is greater than a preset message ratio, the second monitoring result is abnormal; when the negative feedback message ratio is less than or equal to the preset message ratio, the second monitoring result is normal. The monitoring module 32 is further configured for: when the channel information includes a transmission success rate of the current data channel, monitoring whether the transmission success rate is less than a preset success rate by utilizing a third monitoring thread, and obtaining a third monitoring result. The transmission success rate is used to characterize a success proportion of the channel information during the transmission process. When the transmission success rate is less than a preset success rate, the third monitoring result is abnormal; when the transmission success rate is greater than or equal to the preset success rate, the third monitoring result is normal. The monitoring module 32 is further configured for: when the channel information includes a radio network signal measurement value, monitoring whether the radio network signal measurement value is less than a corresponding preset signal reference value by utilizing a fourth monitoring thread, and obtaining a fourth monitoring result. The radio network signal measurement value is used to characterize the quality of the radio network signal of the current data channel, and the radio network signal measurement value includes at least one of: reference signal received power, reference signal receiving quality, a received signal strength indicator, and a signal to interference plus noise ratio. When the radio network signal measurement value is less than the corresponding preset signal reference value, the fourth monitoring result is abnormal; and when the radio network signal measurement value is greater than or equal to the corresponding preset signal reference value, the fourth monitoring result is normal.

In a specific application scenario, the switching module 34 is configured for notifying the host computer system of interrupting data connection with the server, and switching the current data channel to the backup data channel.

In a specific application scenario, the switching module 34 is configured for creating a control channel with the host computer system, the control channel being used to transmit instruction information to the host computer system; and transmitting the instruction information to the host computer system through the control channel, the instruction information being used to instruct the host computer system to interrupt the data connection with the server.

It should be noted that other corresponding descriptions of various functional units involved in the data channel switching apparatus provided by the embodiment may refer to the corresponding descriptions in FIG. 1 and FIG. 2, which will not be repeated herein.

Based on the above methods shown in FIG. 1 and FIG. 2, correspondingly, this embodiment further provides a computer-readable storage medium having a computer program stored thereon. The computer program, when executed by a processor, implements the above methods shown in FIG. 1 and FIG. 2.

Based on this understanding, the technical solutions of the present disclosure may be embodied in the form of a software product. The software product may be stored in a non-volatile storage medium (which may be a CD-ROM, a U disk, a mobile hard disk, and the like), and includes several instructions to enable a computer device (which may be a personal computer, a server, or a network device, and the like) to execute the methods of each implementation scenario of the present disclosure.

Based on the above methods shown in FIG. 1 and FIG. 2 and a virtual apparatus embodiment shown in FIG. 5, in order to achieve the above objects, an embodiment of the present disclosure further provides an electronic device that may be provided on a vehicle (such as an electric automobile) side. The device includes a storage medium and a processor. The storage medium is configured to store a computer program; and the processor is configured to execute the computer program to implement the above methods shown in FIG. 1 and FIG. 2.

Optionally, the above physical device may further include a user interface, a network interface, a camera, a radio frequency (RF) circuit, a sensor, an audio circuit, a WI-FI module, and the like. The user interface may include a Display, an input unit such as a Keyboard, and the like, and the optional user interface may further include a USB interface, a card reader interface, and the like. The network interface may optionally include a standard wired interface and a wireless interface (such as a WI-FI interface), and the like.

Those skilled in the art may understand that a structure of the above physical device provided by this embodiment does not constitute a limitation on the physical device, and may include more or fewer components, combine certain components, or have different component arrangements.

The storage medium may further include an operating system and a network communication module. The operating system is a program which manages hardware and software resources of the above physical device, and supports running of information processing programs and other software and/or programs. The network communication module is used to implement communication between various components inside the storage medium and communication with other hardware and software in the information processing physical device.

Through the above description of the embodiments, those skilled in the art may clearly understand that the present disclosure may be implemented by means of software plus a necessary general hardware platform, and may also be implemented by hardware. By applying the solutions of this embodiment, the present disclosure may achieve rapid switching of data channels and ameliorate the problem of a network lag caused by a lowered network speed compared with the related art. Specifically, multiple pieces of channel information of a current data channel may be acquired first, where the current data channel is a channel that is currently used for data communication between a host computer system and a server; the multiple pieces of channel information are monitored based on an abnormal state detection strategy to obtain multiple monitoring results corresponding to the multiple pieces of channel information, where the abnormal state detection strategy includes at least one abnormal state detection strategy for network layer data transmission and at least one abnormal state detection strategy for radio network signal quality; a first decision module is configured for deciding that a communication state of the current data channel is abnormal when a preset quantity of monitoring results among the multiple monitoring results are abnormal; and the current data channel is switched to a backup data channel when the communication state of the current data channel is abnormal, where the backup data channel is a channel between the host computer system and the server for which data communication is to be established. By applying the technical solutions of the present disclosure, network monitoring on the current data channel is achieved, and when it is determined that the communication state of the current data channel is abnormal, the current data channel is switched to the backup data channel. Compared with the previous solution of passively waiting for connection or disconnection of a wireless power distribution network, an active probing and abnormality decision solution is provided, which greatly shortens the abnormality discovery time and improves the use experience of a user.

A data transmission method and apparatus for a dual-channel network, an electronic device, and a storage medium of the embodiments of the present disclosure will be described below with reference to the accompanying drawings.

FIG. 6 is a schematic flow diagram of a data transmission method for a dual-channel network provided by an embodiment of the present disclosure.

As shown in FIG. 6, the method is applied to a baseband of a vehicle, and includes steps described below.

At step 301, a target radio bearer link for transmitting to-be-sent data is determined according to a type identifier of the to-be-sent data and a preset forwarding strategy. The type identifier is used to distinguish different service types that are defined according to the services in the vehicle. A corresponding relationship between the type identifier and the radio bearer link is recorded in the preset forwarding strategy. The radio bearer links include two radio bearer links in the dual-channel network.

The service types may be types defined according to the services in the vehicle. For example, there are multiple domain controllers, that is, multiple service lines on the vehicle. Each domain controller integrates multiple services. When defining the service type to which a service belongs, it may be defined according to the service line to which the service belongs, and may also be defined according to a specific function of the service or a data type of the transmitted data, and the like, which is not limited in the embodiment of the present disclosure. The to-be-sent data for the same service line may correspond to the same radio bearer link, and may also correspond to different radio bearer links, which is not limited in the embodiment of the present disclosure.

For example, an extended domain control unit (XCU) is served as a computing platform for control of multiple domains such as a vehicle power domain, a chassis domain, and a body domain, and integrates control and computing functions in the fields such as vehicles, battery systems, vehicle gateways, and vehicle bodies. A Head Unit (HU) is served as a cockpit domain controller and is an in-vehicle infotainment system. An Autonomous Driving Control Unit (ADCU) or a Full-Self Driving (FSD) domain controller is also included.

The services in the vehicle include: data collection and reporting services, vehicle-cloud message services, log reporting services, and the like on the XCU; video services, audio services, voice assistant services, and the like on the HU; and map data services, and the like on the ADCU or FSD. Specifically, any applicable service type may be included, which is not limited in the embodiment of the present disclosure.

In a possible implementation mode of the embodiment of the present disclosure, for to-be-sent data of different service types, the type identifiers thereof are different, and the service types may be distinguished according to the type identifiers.

In a possible implementation mode of the embodiment of the present disclosure, the preset forwarding strategy is configured in advance, and includes the corresponding relationship between type identifiers and radio bearer links. When there is to-be-sent data waiting for forwarding, a corresponding target radio bearer link is determined in the preset forwarding strategy according to the type identifier of the to-be-sent data.

In a possible implementation mode of the embodiment of the present disclosure, the radio bearer link is established according to the SIM. One radio bearer link is established for one SIM. The radio bearer link is not only used to transmit the to-be-sent data, but also used to receive data.

At step 302, the to-be-sent data is transmitted to a corresponding target address based on the target radio bearer link.

In a possible implementation mode of the embodiment of the present disclosure, the to-be-sent data includes an Internet Protocol (IP) address of a target server.

The main technical solution of the data transmission method for the dual-channel network provided by the present disclosure includes: determining a target radio bearer link for transmitting the to-be-sent data according to a type identifier of the to-be-sent data and a preset forwarding strategy; where a corresponding relationship between the type identifier and the radio bearer link is recorded in the preset forwarding strategy, and the radio bearer links include two radio bearer links in the dual-channel network; and transmitting the to-be-sent data to a corresponding target address based on the target radio bearer link. Compared with the related art, the radio bearer links in the embodiment of the present disclosure include two radio bearer links in the dual-channel network, before performing data transmission, the radio bearer link corresponding to the to-be-sent data is determined first according to the preset forwarding strategy, and the to-be-sent data is transmitted according to the determined corresponding radio bearer link. By transmitting data through two radio bearer links, parallel transmission of data under the dual-channel network is supported, providing larger uplink/downlink bandwidth and higher data transmission performance.

In a possible implementation mode of the embodiment of the present disclosure, before the step, in which a target radio bearer link for transmitting to-be-sent data is determined according to a type identifier of the to-be-sent data and a preset forwarding strategy, the method further includes:

establishing a data connection between a baseband and at least one host computer, where the baseband includes two radio bearer links in the dual-channel network, and the host computer includes at least one application; and the data connection is used to transfer to-be-sent data generated by the application to the radio bearer link.

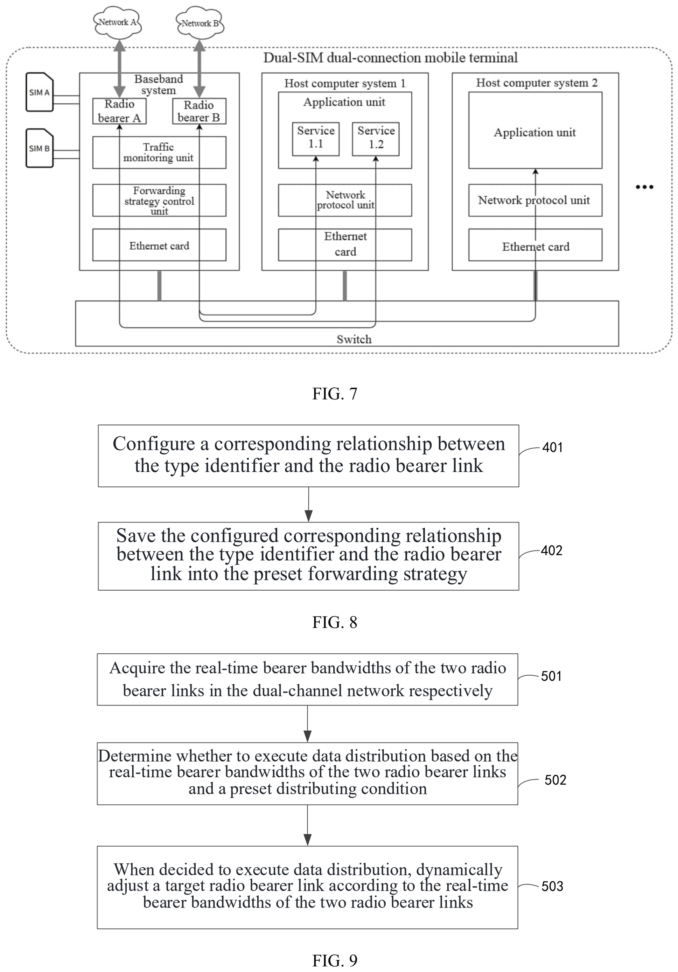

Referring to FIG. 7, FIG. 7 is a framework diagram of a communication system provided by an embodiment of the present disclosure. As shown in FIG. 7, when the host computer system needs to exchange data with the external world, data needs to be forwarded through the baseband system. When there is only one host computer system and one baseband system, no switch is needed, and a direct connection can be established between the host system and the baseband system. When there are two or more host computer systems, communication between the host computer systems and the baseband system needs to be established by means of a switch.

The embodiment of the present disclosure is described using an example where a quantity of host computer systems is 2. For example, current vehicles include an entertainment screen and a central control screen, which can be regarded as two different host systems respectively. The two host computer systems both need to communicate with the external world by using the baseband system of the vehicle. However, it should be noted that this description mode is only an exemplary illustration and not a specific limitation on the specific quantity of the host computer systems, which is not limited in the embodiment of the present disclosure. Host system 1 corresponds to the entertainment screen system, and host system 2 corresponds to the central control screen system. The application unit of host system 1 refers to applications running on the entertainment screen system, with two applications operating simultaneously: one application is service 1.1 (e.g., video service), and the other application is service 1.2 (e.g., voice assistant service). The to-be-sent data for service 1.2 is routed through a network protocol unit and an Ethernet card of the host computer system 1 and an Ethernet card of the baseband system on the vehicle, reaches a forwarding strategy control unit of the baseband system. The forwarding strategy control unit determines the radio bearer link to which the to-be-sent data is distributed, and then a traffic monitoring unit dynamically adjusts the target radio bearer link according to the real-time bearer bandwidth of each radio bearer link. Finally, the to-be-sent data for service 1.2 is distributed to radio bearer link A. Similarly, the to-be-sent data for service 1.1 is distributed to radio bearer link B. The to-be-sent data for the application unit of the host computer system 2 is distributed to radio bearer link B.

Continuing to refer to FIG. 7, as shown in FIG. 7, the radio bearer links are separately created based on subscriber identity modules corresponding to the dual-channel network. The radio bearer link is a communication channel between the SIM and an operator base station, and it is used for transmitting/downloading data. The radio bearer A is established for SIMA, and the radio bearer B is established for SIMB. It should be noted that the radio bearer in FIG. 7 is the radio bearer link in the embodiment of the present disclosure.

In a possible implementation mode of the embodiment of the present disclosure, before executing step 301, in which the target radio bearer link for transmitting the to-be-sent data is determined according to the type identifier of the to-be-sent data and the preset forwarding strategy, the corresponding relationship between the type identifier and the radio bearer link needs to be set. Referring to FIG. 8, FIG. 8 is a schematic flow diagram of a data transmission method for a dual-channel network provided by an embodiment of the present disclosure. The method includes steps described below.

At step 401, a corresponding relationship between the type identifier and the radio bearer link is configured.

In a possible implementation mode of the embodiment of the present disclosure, the corresponding relationship may be configured according to different type identifiers of the to-be-sent data. The type identifiers include at least one of a protocol type, a target address, a target port number, a source address, and a source port number. For example, the corresponding relationship between the protocol type and the radio bearer link is configured based on the protocol type of the to-be-sent data. The protocol type is a transport layer protocol (TCP or UDP, etc.), which may be used to distinguish different service types. Optionally, the corresponding relationship between the target address and the radio bearer link is configured based on the target address of the to-be-sent data. The target address is a server IP address, which may be used to distinguish servers corresponding to different services. Optionally, the corresponding relationship between the target port number and the radio bearer link is configured based on the target port number of the to-be-sent data. The target port number is a server port number, which is used to distinguish different service processes. Continuing to refer to FIG. 7, as shown in FIG. 7, the host computer system may include different application units, and one service unit may include different service processes. Optionally, the corresponding relationship between the source address of the to-be-sent data and the radio bearer link is configured according to the source address of the to-be-sent data. The source address is a source system IP address, which may be used to distinguish different host computer systems. Optionally, the corresponding relationship between the source port number of the to-be-sent data and the radio bearer link is configured based on the source port number of the to-be-sent data. The source port number is a source system port number, which may be used to distinguish different service modules. In practical applications, the corresponding relationship between the type identifier and the radio bearer link may be determined according to actual requirements, network requirements, and at least one type identifier. For example, the target port is configured to the corresponding radio bearer link according to different application protocols: an HTTP protocol corresponds to radio bearer link A, and an FTP protocol corresponds to radio bearer link B; the target port is configured to the corresponding link according to different service types: a Web service corresponds to radio bearer link A, and a database service corresponds to radio bearer link B. It should be noted that this description mode is only an exemplary illustration and not a limitation on the specific configuration manner. The specific rules and configuration manners may vary depending on different network devices and network management systems. In actual configuration, corresponding configuration and adjustment may be performed according to the specific network environments and requirements, combined with the functions of network devices and the support of management tools.

In a possible implementation mode of the embodiment of the present disclosure, the corresponding relationship between the type identifier and the radio bearer link may also be configured in the following manner: the corresponding relationship between the application type and the radio bearer link is configured according to the application type of the target application program, where the target application program is used to generate the to-be-sent data.

The type identifier includes an application type, that is, the target application program which generates the to-be-sent data is determined, and the application type of the target application program is acquired. For example, the corresponding application type is determined according to an Application ID (APP ID). The application type may be a type defined for the application running in the vehicle. The applications running in the vehicle include data collection and reporting type applications, vehicle-cloud message type applications, log reporting type applications, and the like on the XCU, video type applications, audio type applications, voice assistant type applications, and the like on the HU, and map data type applications, and the like on the ADCU or FSD. Specifically, it may include any applicable application type, which is not limited in the embodiment of the present disclosure.

Some application units are pre-installed in the host computer system when it leaves the factory. Users may download required applications according to actual requirements during use. Therefore, the corresponding relationship between the application unit and the radio bearer link may also be configured according to the source of the application unit. For example, the applications pre-installed in the system use the same radio bearer link, and the applications downloaded by the users use another radio bearer link. Specifically, the corresponding relationship between the type identifier and the radio bearer link is not limited in the embodiment of the present disclosure.

In a possible implementation mode of the embodiment of the present disclosure, different service modules in the application unit of the same host computer system may perform transmission through different radio bearer links, and the application units in different host computer systems may perform transmission through the same or different radio bearer links. Specifically, it varies according to different configurations of the matching identifier, which is not limited in the embodiment of the present disclosure.

Step 402: the configured corresponding relationship between the type identifier and the radio bearer link is stored into the preset forwarding strategy.

The configured corresponding relationship is stored in the preset forwarding strategy to facilitate direct calling during application.

In a possible implementation mode of the embodiment of the present disclosure, the corresponding relationship between the type identifier and the radio bearer link is configured in advance. In practical applications, the target radio bearer links corresponding to the data types of various to-be-sent data may be the same radio bearer link, while there is no data in the other radio bearer link. Therefore, after transmitting the to-be-sent data to the corresponding target address based on the target radio bearer link, it is also necessary to monitor data traffic in the two radio bearer links to achieve dynamic diverting of the data. Referring to FIG. 9, FIG. 9 is a schematic flow diagram of a data transmission method for a dual-channel network provided by an embodiment of the present disclosure, including steps 501 to 503.

At step 501, real-time bearer bandwidths of the two radio bearer links in the dual-channel network are acquired respectively.

The bearer bandwidth refers to a data transmission volume of the radio bearer link within the same time. The data volume that one radio bearer link can transmit per unit time is limited, which is specifically related to the device performance of the device, and not limited in the embodiment of the present disclosure.

At step 502, it is determined whether to execute data distribution based on the real-time bearer bandwidths of the two radio bearer links and a preset distributing condition respectively.

Whether to execute data distribution may be determined according to the maximum bearer bandwidth of the radio bearer links, or according to a bearer difference between the two radio bearer links. For example, it is determined whether the difference between the real-time bearer bandwidths of the two radio bearer links is greater than or equal to a preset difference threshold; or, it is respectively determined whether the real-time bearer bandwidths of the two radio bearer links are greater than or equal to a preset bearer threshold. Specifically, the preset distributing condition is not limited in the embodiment of the present disclosure.

At step 503, when it is decided to execute data distribution, a target radio bearer link is dynamically adjusted according to the real-time bearer bandwidths of the two radio bearer links.

When the difference between the real-time bearer bandwidths of the two radio bearer links is greater than or equal to the preset difference threshold, it is decided to execute data distribution; or, when the real-time bearer bandwidths of the two radio bearer links are greater than or equal to the preset bearer threshold, it is decided to execute data distribution.

In a possible implementation mode of the embodiment of the present disclosure, after deciding to execute data distribution, upon receiving the to-be-sent data, the corresponding radio bearer link is no longer determined according to the type identifier, but is determined according to the real-time bearer bandwidth of the radio bearer link. For example, if the bearer bandwidth of radio bearer link A is 60% and the bearer bandwidth of radio bearer link B is 90%, after deciding to execute data distribution, upon receiving the to-be-sent data, the data is directly transmitted through radio bearer link A without determining the radio bearer link according to the type identifier, until it is determined that data distribution does not need to be executed, and then the radio bearer link is determined according to the type identifier of the to-be-sent data.

In a possible implementation mode of the embodiment of the present disclosure, after step 502, in which the to-be-sent data is transmitted to a corresponding target address based on the target radio bearer link, it is also necessary to monitor the real-time bearer bandwidth of the target radio bearer link: acquiring the real-time bearer bandwidth of the target radio bearer link; determining whether to execute data distribution based on the real-time bearer bandwidth and a preset distributing condition; and when it is decided to execute data distribution, a preset proportion of real-time bearer bandwidth in the target radio bearer link is distributed to the other radio bearer link in the dual-channel network.

In a possible implementation mode of the embodiment of the present application, when it is determined that the difference between the real-time bearer bandwidths of the two radio bearer links is less than the preset difference threshold, it is decided not to execute data distribution; or, when it is determined that the real-time bearer bandwidths of the two radio bearer links are less than the preset bearer threshold, it is decided not to execute data distribution.

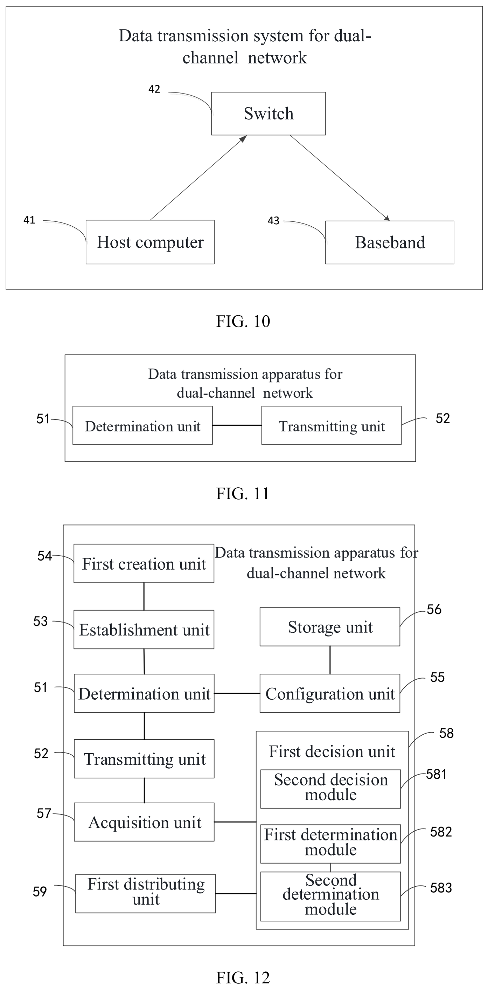

In order to facilitate understanding of an interaction relationship among the baseband, the host computer, and the switch in the embodiment of the present disclosure, referring to FIG. 10, FIG. 10 is a schematic structural diagram of a data transmission system for a dual-channel network provided by an embodiment of the present disclosure. As shown in FIG. 10, the data transmission system includes a host computer 41, a switch 42 and a baseband 43.

The host computer 41 is configured for generating to-be-sent data and transmitting the to-be-sent data to the switch. The to-be-sent data is generated by various applications in the host computer 41.

The switch 42 is configured for receiving the to-be-sent data that is sent from each host computer 41 and transmitting the to-be-sent data to the baseband 43. It should be noted that only one host computer is used in FIG. 10 to illustrate the interaction relationship among the baseband, the host computer, and the switch, but this description mode is not a limitation on the specific quantity of the host computers, and the quantity of the host computers is not limited in the embodiment of the present disclosure.

The baseband 43 is configured for: receiving the to-be-sent data that is sent from the switch 42, and determining a target radio bearer link for transmitting the to-be-sent data according to a type identifier of the to-be-sent data and a preset forwarding strategy, where a corresponding relationship between the type identifier and the radio bearer link is recorded in the preset forwarding strategy, and the radio bearer links include two radio bearer links in the dual-channel network; and transmitting the to-be-sent data to a corresponding target address based on the target radio bearer link.

Corresponding to the above data transmission method for the dual-channel network, the present disclosure further provides a data transmission apparatus for a dual-channel network. Since the apparatus embodiment of the present disclosure corresponds to the above method embodiment, for details not disclosed in the apparatus embodiment, reference may be made to the above method embodiment, which will not be repeated in the present disclosure.

FIG. 11 is a schematic structural diagram of a data transmission apparatus for a dual-channel network provided by an embodiment of the present disclosure. As shown in FIG. 11, the data transmission apparatus includes:
a determination unit 51 configured for determining a target radio bearer link for transmitting to-be-sent data according to a type identifier of the to-be-sent data and a preset forwarding strategy; where a corresponding relationship between the type identifier and the radio bearer link is recorded in the preset forwarding strategy, and the radio bearer links include two radio bearer links in the dual-channel network; and
a transmitting unit 52 configured for transmitting the to-be-sent data to a corresponding target address based on the target radio bearer link.

The main technical solution of the data transmission apparatus for the dual-channel network provided by the present disclosure includes: determining a target radio bearer link for transmitting the to-be-sent data according to a type identifier of the to-be-sent data and a preset forwarding strategy; where a corresponding relationship between the type identifier and the radio bearer link is recorded in the preset forwarding strategy, and the radio bearer links include two radio bearer links in the dual-channel network; and transmitting the to-be-sent data to a corresponding target address based on the target radio bearer link. Compared with the related art, the radio bearer links in the embodiment of the present disclosure include two radio bearer links in the dual-channel network, the radio bearer link corresponding to the to-be-sent data is first determined according to the preset forwarding strategy before data transmission, and then the to-be-sent data is transmitted according to the determined corresponding radio bearer link. The data is transmitted through two radio bearer links, thereby supporting parallel transmission of the data under the dual-channel network, with relatively large uplink and downlink bandwidths and high data transmission performance.

Further, in a possible implementation mode of this embodiment, as shown in FIG. 12, the data transmission apparatus further includes an establishment unit 53 configured for establishing data connection between the baseband and at least one host computer before determining the target radio bearer link for transmitting the to-be-sent data according to the type identifier of the to-be-sent data and the preset forwarding strategy by the determination unit 51. The baseband includes two radio bearer links in the dual-channel network, and the host computer includes at least one application. The data connection is used to transfer to-be-sent data generated by the application to the radio bearer link.

Further, in a possible implementation mode of this embodiment, as shown in FIG. 12, the data transmission apparatus further includes:
a first creation unit 54 configured for creating the radio bearer links based on subscriber identity modules corresponding to the dual-channel network before establishing, by the establishment unit 53, data connection between the baseband and at least one host computer.

Further, in a possible implementation mode of this embodiment, the type identifier includes at least one of a protocol type, a target address, a target port number, a source address, and a source port number. As shown in FIG. 12, the data transmission apparatus further includes a configuration unit 55 and a storage unit 56.

The configuration unit 55 is configured for configuring, based on the protocol type of the to-be-sent data, a corresponding relationship between the protocol type and the radio bearer link; or
configuring, based on the target address of the to-be-sent data, a corresponding relationship between the target address and the radio bearer link; or
configuring, based on the target port number of the to-be-sent data, a corresponding relationship between the target port number and the radio bearer link; or
configuring, based on the source address of the to-be-sent data, a corresponding relationship between the source address and the radio bearer link; or
configuring, based on the source port number of the to-be-sent data, a corresponding relationship between the source port number and radio bearer link.

The storage unit 56 is configured for saving the configured corresponding relationship between the type identifier and the radio bearer link into the preset forwarding strategy.

Further, in a possible implementation mode of this example, the configuration unit 55 is further configured for:
configuring, according to the application type of a target application program, a corresponding relationship between the application type and the radio bearer link, the target application program being used to generate the to-be-sent data.

Further, in a possible implementation mode of this embodiment, as shown in FIG. 12, the data transmission apparatus further includes:
an acquisition unit 57 configured for acquiring the real-time bearer bandwidth of the target radio bearer link after transmitting, by the transmitting unit, the to-be-sent data to the corresponding target address based on the target radio bearer link;
a first decision unit 58 configured for determining whether to execute data distribution based on the real-time bearer bandwidth and the preset distributing condition; and
a first distributing unit 59 configured for: when it is decided to execute data distribution, distributing a preset proportion of real-time bearer bandwidth in the target radio bearer link into the other radio bearer link in the dual-channel network.

Further, in a possible implementation mode of this embodiment,
the acquisition unit 57 is further configured for acquiring the real-time bearer bandwidths of the two radio bearer links in the dual-channel network respectively after transmitting, by the transmitting unit 52, the to-be-sent data to the corresponding target address based on the target radio bearer link;
the first decision unit 58 is further configured for determining whether to execute data distribution based on the real-time bearer bandwidths of the two radio bearer links and the preset distributing condition respectively; and
the first distributing unit 59 is further configured for: when it is decided to execute data distribution, dynamically adjusting the target radio bearer link according to the real-time bearer bandwidths of the two radio bearer links.

Further, in a possible implementation mode of this embodiment, as shown in FIG. 12, the first decision unit 58 includes:
a second decision module 581 configured for determining whether a difference between the real-time bearer bandwidths of the two radio bearer links is greater than or equal to a preset difference threshold;
a first determination module 582 configured for: when it is determined that the difference between the real-time bearer bandwidths of the two radio bearer links is greater than or equal to the preset difference threshold, deciding to execute data distribution; and
a second determination module 583 configured for: when it is determined that the difference between the real-time bearer bandwidths of the two radio bearer links is less than the preset difference threshold, deciding not to execute data distribution.

Further, in a possible implementation mode of this embodiment, as shown in FIG. 12,
the second decision module 581 is further configured for determining whether the real-time bearer bandwidths of the two radio bearer links are greater than or equal to a preset bearer threshold respectively;
the determination module 582 is further configured for: when it is determined that the real-time bearer bandwidths of the two radio bearer links are greater than or equal to the preset bearer threshold, deciding to execute data distribution; and
the second determination module 583 is further configured for: when it is determined that the real-time bearer bandwidths of the two radio bearer links are less than the preset bearer threshold, deciding not to execute data distribution.

It should be noted that the foregoing explanations of the method embodiments are also applicable to the apparatus of this embodiment, and the principles are the same, which will not be limited in this example.

A data transmission method and apparatus for a multi-channel network, an electronic device, and a storage medium of the embodiments of the present disclosure will be described below with reference to the accompanying drawings.

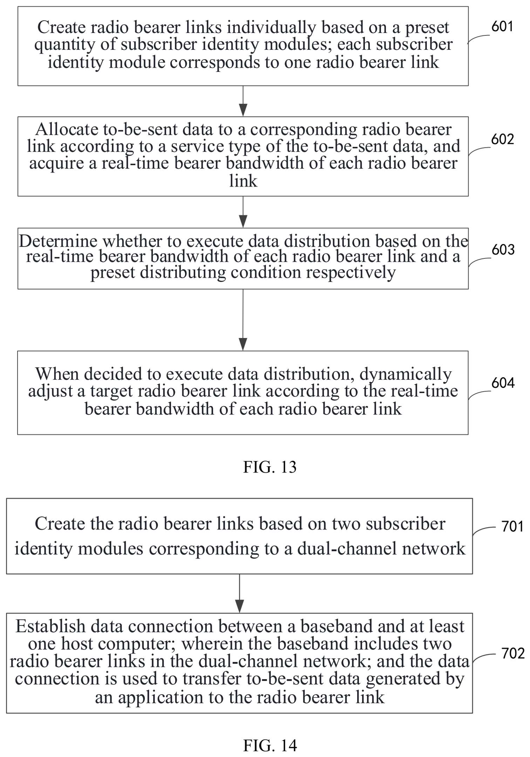

FIG. 13 is a schematic flow diagram of a data transmission method for a multi-channel network provided by an embodiment of the present disclosure.

As shown in FIG. 13, this method is applied to a baseband of a communication terminal, and includes steps described below.

At step 601, radio bearer links are individually created based on a preset quantity of subscriber identity modules, among them, each of the subscriber identity modules corresponds to one of the radio bearer links.

The radio bearer links are created individually based on Subscriber Identity Modules (SIMs) corresponding to the dual-channel network. The radio bearer link is a communication channel between the SIM and an operator base station, and is configured for transmitting/downloading data. In a possible implementation mode of the embodiment of the present disclosure, different SIMs correspond to different radio bearer links. For example, if the preset quantity is 3, that is, there are SIM A, SIM B, and SIM C, then radio bearer link A is created for SIM A, radio bearer link B is created for SIM B, and radio bearer link C is created for SIM C. It should be noted that this description mode is only an exemplary illustration and not a specific limitation on the specific preset quantity, which is not limited in the embodiment of the present disclosure.

At step 602, to-be-sent data is allocated to a corresponding radio bearer link according to a service type of the to-be-sent data, and the real-time bearer bandwidth of each of the radio bearer links are acquired.

The bearer bandwidth is a data transmission volume of the radio bearer link within the same time. The amount of data that one radio bearer link can transmit per unit time is limited, which is specifically related to the device performance of the device, and not limited in the embodiment of the present disclosure.

In a possible implementation mode of the embodiment of the present disclosure, the corresponding relationship between the service type of the to-be-sent data and the radio bearer link is configured in advance. In practical applications, the corresponding relationship may be configured according to one parameter or a combination of multiple parameters in the IP protocol five-tuple (a protocol type, a target address, a target port number, a source address, and a source port number) of the to-be-sent data, which is not specifically limited in the embodiment of the present disclosure.

At step 603, it is determined whether to execute data distribution based on the real-time bearer bandwidths of the radio bearer links and a preset distributing condition.

The preset distributing condition is configured in advance. For example, it may be determined whether data distribution needs to be performed according to factors such as the real-time bearer bandwidth of each link, the situation of a network load, and the requirement of a user. When the distributing condition is met, data distribution operation will be executed, and data traffic is allocated to multiple links for transmission.

At step 604, when it is decided to execute data distribution, the target radio bearer link is dynamically adjusted according to the real-time bearer bandwidths of the radio bearer links.

In a possible implementation mode of the embodiment of the present disclosure, after deciding to execute data distribution, upon receiving the to-be-sent data, the corresponding radio bearer link is no longer determined according to the type identifier, but is determined according to the real-time bearer bandwidths of the radio bearer links. For example, if the bearer bandwidth of radio bearer link A is 60% and the bearer bandwidth of radio bearer link B is 90%, after deciding to execute data distribution, upon receiving the to-be-sent data, the data is directly transmitted through radio bearer link A without degerming the radio bearer link according to the type identifier, until it is determined that data distribution does not need to be executed, and then the radio bearer link is determined according to the type identifier of the to-be-sent data. It should be noted that when executing data distribution, dynamic decision and adjustment need to be performed according to the real-time bearer bandwidth and the preset distributing condition. For example, if the real-time bearer bandwidth of a certain link is reduced and does not meet the distributing condition, the data distribution may be paused; or after the real-time bearer bandwidth of the target radio bearer link meets the preset distributing condition, the data is distributed onto other radio bearer links to ensure the stability and reliability of data transmission.

The main technical solution of the data transmission method for the multi-channel network provided by the present disclosure includes: firstly, creating radio bearer links based on a preset quantity of subscriber identity modules, among them, each of the subscriber identity modules corresponds to one of the radio bearer links; allocating to-be-sent data to a corresponding radio bearer link according to a service type of the to-be-sent data, and acquiring real-time bearer bandwidths of the radio bearer links; secondly, determining whether to execute data distribution based on the real-time bearer bandwidths of the radio bearer links and a preset distributing condition; and finally, when it is decided to execute data distribution, dynamically adjusting the target radio bearer link according to the real-time bearer bandwidths of the radio bearer links. Compared with the related art, in the embodiment of the present disclosure, the real-time bearer bandwidths of various radio bearer links are monitored and distributing is performed for the radio bearer link meeting the distributing condition according to the preset distributing condition in a timely manner, so that the situation of nonuniform distribution of bearer bandwidths is avoided, thereby improving the efficiency and quality of data transmission, and thus improving the stability of network connection and user experience.

In a possible implementation mode of the embodiment of the present disclosure, since the radio bearer link exists in the baseband system and the to-be-sent data is generated by the host computer system, it is necessary to establish data connection between the host computer system and the baseband system in advance. Referring to FIG. 14, FIG. 14 is a schematic flow diagram of a data transmission method for a multi-channel network provided by an embodiment of the present disclosure. The data transmission method includes steps 701 to 702.

At step 701, radio bearer links are created individually based on two subscriber identity modules corresponding to a dual-channel network.

In a possible implementation mode of the embodiment of the present disclosure, for the configuration and device support of the dual-channel network, the radio bearer links may be created by using different technologies, such as LTE, and 5G. According to the characteristics and requirements of the dual-channel network, an independent radio bearer link will be separately created for each subscriber identity module, and parameters of the radio bearer link such as a frequency band, a bandwidth, and a transmission rate may also be adjusted. Specifically, the settings are made according to network environments, hardware devices, and network requirements, which will not be limited in the embodiment of the present disclosure.

At step 702, data connection between the baseband and at least one host computer is established. The baseband includes two radio bearer links in the dual-channel network; and the data connection is used to transfer to-be-sent data generated by an application to the radio bearer links.

In a possible implementation mode of the embodiment of the present disclosure, a quantity of host computers is not limited. There may be 1, 2 or more host computer systems, such as a central control system and an entertainment system in a vehicle. In the case of multiple host computer systems, the data connection between multiple host computer systems and one baseband system is achieved by means of a switch.

In a possible implementation mode of the embodiment of the present disclosure, the host computer is a domain controller in the vehicle. For example, host computer system 1 is an extended domain control unit (XCU) that is served as a computing platform for control of multiple domains such as a vehicle power domain, a chassis domain, and a body domain, and integrated with control and computing functions in the fields such as vehicles, battery systems, vehicle gateways, and bodies. Host computer system 2 is a Head Unit (HU) that is served as a cockpit domain controller and is an in-vehicle infotainment system. The host computer system is an Autonomous Driving Control Unit (ADCU) or a Full-Self Driving (FSD) domain controller.

The radio bearer links are created based on the two subscriber identity modules corresponding to the dual-channel network, and the data connection between the baseband and at least one host computer is established, thereby achieving the transfer of application data and the use of the radio bearer links.

In a possible implementation mode of the embodiment of the present disclosure, when executing step 602, in the case of multiple host computer systems, reference may be made to the step of: determining the corresponding radio bearer link based on the preset forwarding strategy and the service type of the to-be-sent data, where different to-be-sent data from a same host computer system may be allocated to different radio bearer links; and different to-be-sent data from different host computer systems may be allocated to the same radio bearer link. It should be noted that data of different host computer systems may be transmitted using the same radio bearer link, and data of the same host computer system may be transmitted using different radio bearer links. In practical applications, it varies according to different preset forwarding strategies. For example, when the preset forwarding strategy is that data of the same host computer system is received and sent by using the same radio bearer link, the preset forwarding strategy shall prevail, that is, data of the same host computer system is received and sent by using the same radio bearer link. It should be noted that the preset forwarding strategy is a static strategy. In practical applications, there are also dynamic adjustment strategies in step 603 and step 604. The dynamic adjustment strategies are not affected by the preset forwarding strategy, and there is no limitation on the corresponding relationship between the to-be-sent data of different host computers and the radio bearer links.

In a possible implementation mode of the embodiment of the present disclosure, before executing step 603, firstly, a corresponding monitoring thread is created for each of the radio bearer links, the monitoring thread being used to acquire the real-time bearer bandwidth of the corresponding radio bearer link; the monitoring thread is a special thread which runs in the background and does not block the normal execution of a program. The task of the monitoring thread is to acquire real-time bearer bandwidth information of the radio bearer link periodically or in real time. This information may be used to monitor and manage the situation of a load of a radio network to facilitate optimization and adjustment. In practical applications, a frequency at which the monitoring thread acquires the real-time bearer bandwidth may be comprehensively set according to actual requirements, which is not limited in the embodiment of the present disclosure. By creating the corresponding monitoring thread, the system or application may acquire the bandwidth information of the radio bearer link in a timely manner and make the corresponding adjustment and optimization according to this information to provide better radio network services.

After creating the monitoring threads, the real-time bearer bandwidths of the radio bearer links are separately acquired according to the monitoring threads corresponding to the radio bearer links. The monitoring threads are in one-to-one correspondence with the radio bearer links.

In a possible implementation mode of the embodiment of the present disclosure, after step 604, in which one radio bearer link is determined as the target radio bearer link, and unsent to-be-sent data is transmitted by using the target radio bearer link, it is also necessary to monitor the real-time bearer bandwidth of the target radio bearer link, including the steps of: acquiring the real-time bearer bandwidth of the target radio bearer link; determining whether to execute data distribution based on the real-time bearer bandwidth and the preset distributing condition; and when it is decided to execute data distribution, distributing a preset proportion of real-time bearer bandwidth in the target radio bearer link into other radio bearer links in the multi-channel network. For detailed implementation details, reference may be made to step 602 to step 604, which will not be repeated one by one in the embodiment of the present disclosure.

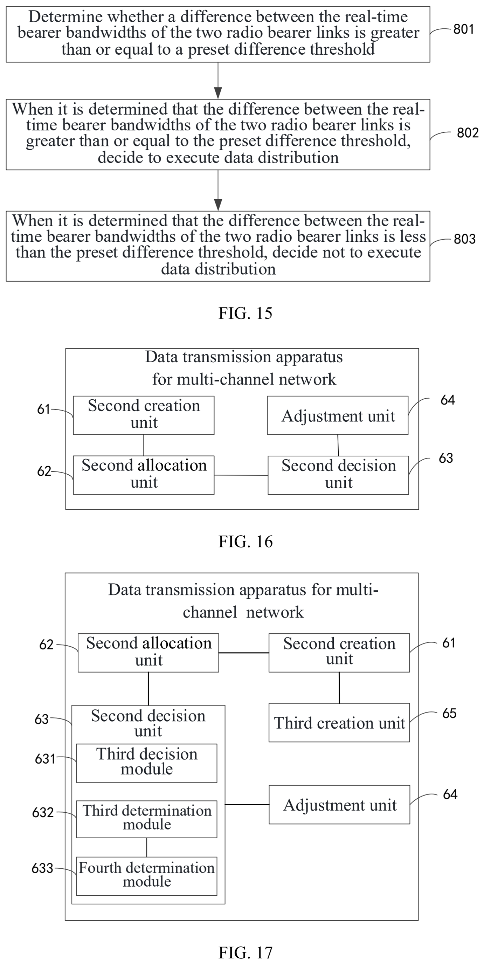

In a possible implementation mode of the embodiment of the present disclosure, when executing distribution in step 604, reference may be made to the following steps. Referring to FIG. 15, FIG. 15 is a schematic flow diagram of a data transmission method for a multi-channel network provided by an embodiment of the present disclosure. The data transmission method includes steps 801 to 803.

At step 801, it is determined whether a difference between the real-time bearer bandwidths of the two radio bearer links is greater than or equal to a preset difference threshold.

In a possible implementation mode of the embodiment of the present disclosure, the preset distributing condition may be divided into the following types: a first type, where it is decided whether a difference between the real-time bearer bandwidths of the two radio bearer links is greater than or equal to a preset difference threshold; and the second type, where it is decided whether the real-time bearer bandwidths of the two radio bearer links are greater than or equal to a preset bearer threshold respectively. In a possible implementation mode of the embodiment of the present disclosure, both the preset difference threshold and the preset bearer threshold are empirical values, and they may be set according to device situations, network environments and network requirements in practical applications, which will not be specifically limited in the embodiment of the present disclosure.

It should be noted that the above two distributing conditions may be set simultaneously or only one of them is set, which will not be specifically limited in the embodiment of the present disclosure.

At step 802, in response to determining that the difference between the real-time bearer bandwidths of the two radio bearer links is greater than or equal to the preset difference threshold, it is decided to execute data distribution.

The data distribution refers to distributing data traffic to different bearer links according to a certain strategy to achieve load balancing and improve network performance. When the difference of the real-time bearer bandwidths of the two radio bearer links exceeds the preset difference threshold, it indicates that one of the links has a relatively high load, which may lead to reduced performance or congestion. When the bearer bandwidth of one radio bearer link exceeds the preset bearer threshold, it will lead to reduced performance or congestion of this link. In order to avoid this situation, a data distribution strategy may be adopted. The manner in which data distribution is executed may be determined according to specific requirements and system design. For example, a load balancing algorithm may be used to distribute data traffic to two links according to proportions or weights to balance the load. Alternatively, the data distribution strategy is dynamically adjusted according to real-time bearer bandwidth information to distribute more data traffic to the link with a relatively high bearer bandwidth.

In a possible implementation mode of the embodiment of the present disclosure, one radio bearer link with a relatively low real-time bearer bandwidth in the two radio bearer links may be determined as the target radio bearer link according to the real-time bearer bandwidth, the target radio bearer link being used to transmit unsent to-be-sent data. By monitoring and acquiring the real-time bearer bandwidth information of the two radio bearer links, the difference between the real-time bearer bandwidths thereof may be compared, and one radio bearer link with the relatively low real-time bearer bandwidth may be determined, indicating that this link has a relatively light load and may undertake more data transmission tasks. In this case, the to-be-sent data may be allocated to the target radio bearer link for transmission.

After determining the target radio bearer link, a corresponding data distribution strategy may be used to send the unsent data to this link, which may be implemented by adjusting a routing table, configuring a network device, or using a dedicated load balancing algorithm. Specifically, after acquiring new unsent to-be-sent data, there is no need to determine the target radio bearer according to a data type of the to-be-sent data. The data distribution strategy may be dynamically adjusted according to the real-time bearer bandwidth information to ensure that data can be effectively allocated to the target radio bearer link with the relatively low real-time bearer bandwidth.

At step 803, in response to determining that the difference between the real-time bearer bandwidths of the two radio bearer links is less than the preset difference threshold, it is decided not to execute data distribution.

When the difference between the real-time bearer bandwidths of the two radio bearer links is less than the preset difference threshold, or the real-time bearer bandwidths of the two radio bearer links are less than the preset bearer threshold, data distribution does not need to be executed.

Corresponding to the above data transmission method for the multi-channel network, the present disclosure further provides a data transmission apparatus for a multi-channel network. Since the apparatus embodiment of the present disclosure corresponds to the above method embodiment, for details not disclosed in the apparatus embodiment, reference may be made to the above method embodiment, which will not be repeated in the present disclosure.

FIG. 16 is a schematic structural diagram of a data transmission apparatus for a multi-channel network provided by an embodiment of the present disclosure. As shown in FIG. 16, the data transmission apparatus includes a second creation unit 61, a second allocation unit 62, a second decision unit 63 and an adjustment unit 64.

The second creation unit 61 is configured for creating radio bearer links individually based on a preset quantity of subscriber identity modules, among them, each of the subscriber identity modules corresponds to one of the radio bearer links.

The second allocation unit 62 is configured for allocating to-be-sent data to a corresponding radio bearer link according to a service type of the to-be-sent data, and acquiring real-time bearer bandwidths of the radio bearer links.

The second decision unit 63 is configured for determining whether to execute data distribution based on the real-time bearer bandwidths of the radio bearer links and a preset distributing condition respectively.

The adjustment unit 64 is configured for: when it is decided to execute data distribution, dynamically adjusting the target radio bearer link according to the real-time bearer bandwidths of the radio bearer links.

The main technical solution of the data transmission apparatus for the multi-channel network provided by the present disclosure includes: firstly, creating radio bearer links based on a preset quantity of subscriber identity modules, among them, each of the subscriber identity modules corresponds to one of the radio bearer links; allocating to-be-sent data to a corresponding radio bearer link according to a service type of the to-be-sent data, and acquiring the real-time bearer bandwidths of the radio bearer links respectively; secondly, determining whether to execute data distribution based on the real-time bearer bandwidths of the radio bearer links and a preset distributing condition; and finally, when it is decided to execute data distribution, dynamically adjusting the target radio bearer link according to the real-time bearer bandwidths of the radio bearer links. Compared with the related art, in the embodiment of the present disclosure, by monitoring the real-time bearer bandwidths of various radio bearer links and performing data distribution for the radio bearer links meeting the distributing condition according to the preset distributing condition in a timely manner, the situation of nonuniform distribution of bearer bandwidths is avoided, thereby improving the efficiency and quality of data transmission, and thus improving the stability of network connection and user experience.

Further, in a possible implementation mode of this embodiment, the second creation unit 61 is further configured for:
creating the radio bearer links based on two subscriber identity modules corresponding to the dual-channel network; and
establishing data connection between a baseband and at least one host computer; where the baseband includes two radio bearer links in the dual-channel network; and the data connection is used to transfer to-be-sent data generated by an application to the radio bearer link.

Further, in a possible implementation mode of this embodiment, the second allocation unit 62 is further configured for:
determining the corresponding radio bearer link based on a preset forwarding strategy and the service type of the to-be-sent data; where different to-be-sent data from a same host computer system may be allocated to different radio bearer links; and different to-be-sent data from different host computer systems may be allocated to the same radio bearer link.

Further, in a possible implementation mode of this embodiment, as shown in FIG. 17, the data transmission apparatus further includes:
a third creation unit 65 configured for: creating corresponding monitoring threads for the radio bearer links before acquiring the real-time bearer bandwidths of the radio bearer links by the second allocation unit 62, the monitoring thread being used to acquire the real-time bearer bandwidth of the corresponding radio bearer link.

The second allocation unit 62 is further configured for acquiring the real-time bearer bandwidths of the radio bearer links according to the monitoring threads corresponding to the radio bearer links.

Further, in a possible implementation mode of this embodiments, the second allocation unit 62 is further configured for acquiring the real-time bearer bandwidth of the target radio bearer link after dynamically adjusting the target radio bearer link by the adjustment unit 64; the second decision unit 63 is further configured for determining whether to execute data distribution based on the real-time bearer bandwidths and the preset distributing condition; and the adjustment unit 64 is further configured for: when it is decided to execute data distribution, distributing a preset proportion of real-time bearer bandwidth in the target radio bearer link into other radio bearer links in the multi-channel network.

Further, in a possible implementation mode of this embodiment, as shown in FIG. 17, the second decision unit 63 includes:
a third decision module 631 configured for determining whether a difference between the real-time bearer bandwidths of the two radio bearer links is greater than or equal to a preset difference threshold;
a third determination module 632 configured for: in response to determining that the difference between the real-time bearer bandwidths of the two radio bearer links is greater than or equal to the preset difference threshold, deciding to execute data distribution; and
a fourth determination module 633 configured for: in response to determining that the difference between the real-time bearer bandwidths of the two radio bearer links is less than the preset difference threshold, deciding not to execute data distribution.

Further, in a possible implementation mode of this embodiment, the third decision module 631 is further configured for determining whether the real-time bearer bandwidths of the two radio bearer links are greater than or equal to a preset bearer threshold; the third determination module 632 is further configured for: in response to determining that the real-time bearer bandwidths of the two radio bearer links are greater than or equal to the preset bearer threshold, deciding to execute data distribution; and the fourth determination module 633 is further configured for: in response to determining that the real-time bearer bandwidths of the two radio bearer links are less than the preset bearer threshold, deciding not to execute data distribution.

Further, in a possible implementation mode of this embodiment, the adjustment unit 64 is further configured for determining one radio bearer link with a relatively low real-time bearer bandwidth in the two radio bearer links as the target radio bearer link according to the real-time bearer bandwidths, the target radio bearer link being used to transmit unsent to-be-sent data.

It should be noted that the foregoing explanations of the method embodiments are also applicable to the apparatus of this embodiments, and the principles are the same, which will not be limited in this embodiment.

According to an embodiment of the present disclosure, the present disclosure further provides an electronic device, a readable storage medium, and a computer program product.

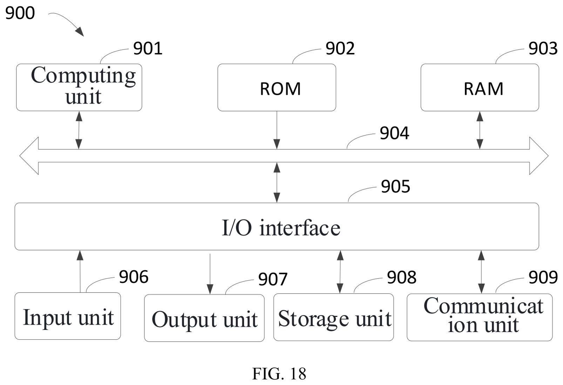

FIG. 18 shows a schematic block diagram of an exemplary electronic device 900 which may be used to implement the embodiments of the present disclosure. The electronic device is intended to represent digital computers in various forms, such as laptop computers, desktop computers, workstations, personal digital assistants, servers, blade servers, mainframe computers, and other suitable computers. The electronic device may also represent mobile apparatuses in various forms, such as personal digital assistants, cellular phones, smart phones, wearable devices, and other similar computing apparatuses. The components shown herein, the connection and relationship between them, and functions thereof are merely exemplary, and are not intended to limit the implementation of the present disclosure described and/or claimed herein.

As shown in FIG. 18, the device 900 includes a computing unit 901, which may execute various appropriate actions and processing according to a computer program stored in a Read-Only Memory (ROM) 902 or a computer program loaded from a storage unit 908 into a Random Access Memory (RAM) 903. In the RAM 903, various programs and data required for the operation of the device 900 may also be stored. The computing unit 901, the ROM 902, and the RAM 903 are connected to each other through a bus 904. An Input/Output (I/O) interface 905 is also connected to the bus 904.

Multiple components in the device 900 are connected to the I/O interface 905, including: an input unit 906, such as a keyboard, and a mouse; an output unit 907, such as various types of displays, speakers, and the like; a storage unit 908, such as a magnetic disk, and an optical disk; and a communication unit 909, such as a network card, a modem, and a wireless communication transceiver. The communication unit 909 allows the device 900 to exchange information/data with other devices through a computer network such as the Internet and/or various telecommunication networks.

The computing unit 901 may be various general-purpose and/or special-purpose processing components with processing and computing capabilities. Some instances of the computing unit 901 include, but are not limited to, a Central Processing Unit (CPU), a Graphic Processing Unit (GPU), various dedicated Artificial Intelligence (AI) computing chips, various computing units running machine learning model algorithms, a Digital Signal Processor (DSP), and any appropriate processor, controller, and microcontroller, and the like. The computing unit 901 executes each method and processing described above, such as the data channel switching method, the data transmission method for the dual-channel network, and the data transmission method for the multi-channel network. For example, in some examples, the data channel switching method, the data transmission method for the dual-channel network, and the data transmission method for the multi-channel network may be implemented as a computer software program which is tangibly contained in a machine-readable medium, such as the storage unit 908. In some examples, part or all of the computer program may be loaded and/or installed on the device 900 via the ROM 902 and/or the communication unit 909. When the computer program is loaded into the RAM 903 and executed by the computing unit 901, one or more steps of the methods described above may be executed. Alternatively, in other examples, the computing unit 901 may be configured to execute the foregoing data channel switching method, the data transmission method for the dual-channel network, and the data transmission method for the multi-channel network in any other appropriate manner (for example, by means of firmware).

Various embodiments of the systems and technologies described above herein may be implemented in a digital electronic circuit system, an integrated circuit system, a Field Programmable Gate Array (FPGA), an Application-Specific Integrated Circuit (ASIC), an Application Specific Standard Product (ASSP), a System On Chip (SOC), a Complex Programmable Logic Device (CPLD), computer hardware, firmware, software, and/or combinations thereof. The various embodiments may include: being implemented in one or more computer programs which may be executed and/or interpreted on a programmable system including at least one programmable processor, wherein the programmable processor may be a special-purpose or general-purpose programmable processor, may receive data and instructions from a storage system, at least one input apparatus, and at least one output apparatus, and may transmit the data and instructions to the storage system, the at least one input apparatus, and the at least one output apparatus.

Program codes for implementing the methods of the present disclosure may be written in any combination of one or more programming languages. These program codes may be provided to a processor or controller of a general-purpose computer, a special-purpose computer, or other programmable data processing apparatuses, so that the program codes, when executed by the processor or controller, cause the functions/operation specified in the flowcharts and/or block diagrams to be implemented. The program codes may be executed entirely on a machine, partially on the machine, and partially on the machine and partially on a remote machine, or entirely on the remote machine or a server as a stand-alone software package.

In the context of the present disclosure, the machine-readable medium may be a tangible medium which may contain or store a program which is used by an instruction execution system, an apparatus, or a device, or combined with the instruction execution system, the apparatus, or the device for use. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the foregoing contents. More specific instances of the machine-readable storage medium may include electrical connection based on one or more wires, a portable computer disk, a hard disk, an RAM, an ROM, an Electrically Programmable Read-Only-Memory (EPROM), or a flash memory, an optical fiber, a Compact Disc Read-Only Memory (CD-ROM), an optical storage device, a magnetic storage device, or any suitable combination of the foregoing contents.

In order to provide interaction with a user, the systems and technologies described herein may be implemented on a computer having: a display apparatus (such as a Cathode-Ray Tube (CRT) or Liquid Crystal Display (LCD) monitor) for displaying information to the user; and a keyboard and pointing apparatus (such as a mouse or trackball) through which the user may provide an input to the computer. Other types of apparatuses may also be used to provide interaction with the user; for example, feedback provided to the user may be sensory feedback in any form (such as visual feedback, auditory feedback, or tactile feedback); and the input from the user may be received in any form (including an acoustic input, a voice input, or a tactile input).

The systems and technologies described herein may be implemented in a computing system including background components (for example, as a data server), a computing system including middleware components (for example, an application server), a computing system including frontend components (for example, a user computer having a graphical user interface or web browser through which the user may interact with the embodiments of the systems and technologies described herein), or a computing system including any combination of such background components, middleware components, or frontend components. The components of the system may be interconnected by digital data communication (such as a communication network) in any form or medium. The instances of the communication network include: a LAN (Local Area Network), a WAN (Wide Area Network), the Internet, and a blockchain network.

A computer system may include a client and a server. The client and the server are generally remote from each other and typically interact with each other through the communication network. A relationship between the client and the server is generated by computer programs running on the corresponding computers and having a client-server relationship with each other. The server may be a cloud server, also known as a cloud computing server or a cloud host, which is a host product in a cloud computing service system to overcome the defects of difficult management and weak service scalability in conventional physical hosts and "Virtual Private Server" (or referred to as "VPS") services. The server may also be a server of a distributed system, or a server combined with a blockchain;

It should be noted that artificial intelligence is a subject which studies making computers simulate certain thinking processes and intelligent behaviors (such as learning, reasoning, thinking, and planning) of humans, and has both hardware-level and software-level technologies. Artificial intelligence hardware technologies generally include technologies such as sensors, dedicated artificial intelligence chips, cloud computing, distributed storage, and big data processing; and artificial intelligence software technologies mainly include several major directions such as a computer vision technology, a speech recognition technology, a natural language processing technology, and machine learning/deep learning, a big data processing technology, and a knowledge graph technology.

It should be understood that steps may be rearranged, added, or deleted when various forms of flows shown above are used. For example, various steps recorded in the present disclosure may be executed in parallel, sequentially, or in a different sequence, as long as the desired results of the technical solutions disclosed in the present disclosure can be achieved, which is not limited herein.

The above specific embodiments do not constitute a limitation on the protection scope of the present disclosure. Those skilled in the art should understand that various modifications, combinations, sub-combinations, and replacements may be made according to design requirements and other factors. Any modification, equivalent substitution, improvement, and the like made within the spirit and principle of the present disclosure shall be included in the protection scope of the present disclosure.

## Claims

1. A data transmission method for a multi-channel network, comprising:
creating radio bearer links individually based on a preset quantity of subscriber identity modules, wherein each of the subscriber identity modules corresponds to one of the radio bearer links;
allocating to-be-sent data to a corresponding radio bearer link according to a service type of the to-be-sent data, and acquiring a real-time bearer bandwidth of each of the radio bearer links;
determining whether to execute data distribution based on the real-time bearer bandwidth of each of the radio bearer links and a preset distributing condition respectively; and
dynamically adjusting a target radio bearer link according to the real-time bearer bandwidth of each of the radio bearer links in response to determining to execute data distribution.

2. The method according to claim 1, wherein the creating radio bearer links individually based on the preset quantity of subscriber identity modules comprises:
creating the radio bearer links individually based on two subscriber identity modules corresponding to a dual-channel network; and
establishing data connection between a baseband and at least one host computer respectively; wherein the baseband comprises two radio bearer links in the dual-channel network, the data connection is used to transfer to-be-sent data generated by an application to the radio bearer links, and the host computer is a domain controller in a vehicle.

3. The method according to claim 2, wherein the allocating to-be-sent data to the corresponding radio bearer link according to the service type of the to-be-sent data comprises:
determining the corresponding radio bearer link based on a preset forwarding strategy and the service type of the to-be-sent data; wherein different to-be-sent data from a same host computer system is allowed to be allocated to different radio bearer links; different to-be-sent data from different host computer systems is allowed to be allocated to the same radio bearer link; and the service type is defined according to services in the vehicle.

4. The method according to claim 1, wherein the allocating to-be-sent data to the corresponding radio bearer link according to the service type of the to-be-sent data comprises:
determining the target radio bearer link for transmitting the to-be-sent data according to a type identifier of the to-be-sent data and a preset forwarding strategy; wherein the type identifier is used to distinguish different service types, the service types are defined according to services in a vehicle, a corresponding relationship between the type identifier and the radio bearer link is recorded in the preset forwarding strategy, and the radio bearer links comprise two radio bearer links in a dual-channel network.

5. The method according to claim 4, wherein the type identifier comprises at least one of a protocol type, a target address, a target port number, a source address, and a source port number, and the preset forwarding strategy is obtained by:
configuring, based on a protocol type of the to-be-sent data, a corresponding relationship between the protocol type and the radio bearer link; and/or
configuring, based on a target address of the to-be-sent data, a corresponding relationship between the target address and the radio bearer link; and/or
configuring, based on a target port number of the to-be-sent data, a corresponding relationship between the target port number and the radio bearer link; and/or
configuring, based on a source address of the to-be-sent data, a corresponding relationship between the source address and the radio bearer link; and/or
configuring, based on a source port number of the to-be-sent data, a corresponding relationship between the source port number and the radio bearer link; and
saving the configured corresponding relationship between the type identifier and the radio bearer link into the preset forwarding strategy.

6. The method according to claim 4, wherein the type identifier comprises an application type, and the preset forwarding strategy is obtained by:
configuring, based on the application type of a target application program, a corresponding relationship between the application type and the radio bearer link, the target application program being used to generate the to-be-sent data; wherein the application type is defined according to applications running in the vehicle.

7. The method according to claim 4, further comprising:
transmitting the to-be-sent data to a corresponding target address based on the target radio bearer link.

8. The method according to claim 1, wherein before the acquiring the real-time bearer bandwidth of each of the radio bearer links, the method further comprises:
creating a respective monitoring thread for each of the radio bearer links, the monitoring thread being used to acquire the real-time bearer bandwidth of the respective radio bearer link;
wherein the acquiring the real-time bearer bandwidth of each of the radio bearer links comprises:
acquiring the real-time bearer bandwidth of each of the radio bearer links according to the respective monitoring thread corresponding to each of the radio bearer links.

9. The method according to claim 1, wherein after dynamically adjusting the target radio bearer link, the method further comprises:
acquiring the real-time bearer bandwidth of the target radio bearer link;
determining whether to execute data distribution based on the real-time bearer bandwidth and the preset distributing condition; and
in response to determining to execute data distribution, distributing a preset proportion of real-time bearer bandwidth in the target radio bearer link into other radio bearer links in the multi-channel network.

10. The method according to claim 2, wherein the determining whether to execute data distribution based on the real-time bearer bandwidth of each of the radio bearer links and the preset distributing condition respectively comprises:
determining whether a difference between the real-time bearer bandwidths of the two radio bearer links is greater than or equal to a preset difference threshold;
in response to determining that the difference between the real-time bearer bandwidths of the two radio bearer links is greater than or equal to the preset difference threshold, deciding to execute data distribution; and
in response to determining that the difference between the real-time bearer bandwidths of the two radio bearer links is less than the preset difference threshold, deciding not to execute data distribution.

11. The method according to claim 2, wherein the determining whether to execute data distribution based on the real-time bearer bandwidth of each of the radio bearer links and the preset distributing condition respectively comprises:
determining whether the real-time bearer bandwidths of the two radio bearer links are greater than or equal to a preset bearer threshold;
in response to determining that the real-time bearer bandwidths of the two radio bearer links are greater than or equal to the preset bearer threshold, deciding to execute data distribution; and
in response to determining that the real-time bearer bandwidths of the two radio bearer links are less than the preset bearer threshold, deciding not to execute data distribution.

12. The method according to any one of claims 1 to 11, wherein the dynamically adjusting the target radio bearer link according to the real-time bearer bandwidth of each of the radio bearer links comprises:
determining, based on the real-time bearer bandwidths, a radio bearer link with a relatively low real-time bearer bandwidth in the two radio bearer links as the target radio bearer link, the target radio bearer link being used to transmit unsent to-be-sent data.

13. A data channel switching method, comprising:
acquiring multiple pieces of channel information of a current data channel, wherein the current data channel is a channel that is currently used for data communication between a host computer system and a server;
monitoring the multiple pieces of channel information based on an abnormal state detection strategy, and obtaining multiple monitoring results corresponding to the multiple pieces of channel information, wherein the abnormal state detection strategy comprises at least one abnormal state detection strategy for network layer data transmission and at least one abnormal state detection strategy for radio network signal quality;
deciding that a communication state of the current data channel is abnormal in response to a preset quantity of monitoring results among the multiple monitoring results being abnormal; and
switching the current data channel to a backup data channel in response to deciding that the communication state of the current data channel is abnormal, wherein the backup data channel is a channel between the host computer system and the server for which data communication is to be established.

14. The method according to claim 13, wherein the monitoring the multiple pieces of channel information based on the abnormal state detection strategy and obtaining multiple monitoring results corresponding to the multiple pieces of channel information comprises:
creating multiple monitoring threads corresponding to the abnormal state detection strategy respectively, monitoring the multiple pieces of channel information through the multiple monitoring threads, and obtaining the multiple monitoring results corresponding to the multiple pieces of channel information;
wherein the deciding that the communication state of the current data channel is abnormal in response to a preset quantity of monitoring results among the multiple monitoring results being abnormal comprises:
acquiring other monitoring results monitored by other monitoring threads in response to the monitoring result of any monitoring thread being abnormal; and
deciding that the communication state of the current data channel is abnormal in response to at least one abnormal monitoring result among the other monitoring results.

15. The method according to claim 14, wherein the monitoring the multiple pieces of channel information through the multiple monitoring threads and obtaining the multiple monitoring results corresponding to the multiple pieces of channel information, comprises:
when the channel information comprises a delivery time of network detection information, monitoring whether the delivery time exceeds a preset delivery time period of the network detection information by utilizing a first monitoring thread to obtain a first monitoring result, wherein the network detection information is used to characterize transmission latency of the channel information during a transmission process;
wherein when the delivery time exceeds the preset delivery time period of the network detection information, the first monitoring result is abnormal; and
when the delivery time does not exceed the preset delivery time period of the network detection information, the first monitoring result is normal.

16. The method according to claim 14, wherein the monitoring the multiple pieces of channel information through the multiple monitoring threads and obtaining the multiple monitoring results corresponding to the multiple pieces of channel information, comprises:
when the channel information comprises a negative feedback message ratio, monitoring whether the negative feedback message ratio is greater than a preset message ratio by utilizing a second monitoring thread to obtain a second monitoring result, wherein the negative feedback message ratio is used to characterize a loss ratio of the channel information during the transmission process;
wherein when the negative feedback message ratio is greater than the preset message ratio, the second monitoring result is abnormal; and
when the negative feedback message ratio is less than or equal to the preset message ratio, the second monitoring result is normal.

17. The method according to claim 14, wherein the monitoring the multiple pieces of channel information through the multiple monitoring threads and obtaining the multiple monitoring results corresponding to the multiple pieces of channel information, comprises:
when the channel information comprises a transmission success rate of the current data channel, monitoring whether the transmission success rate is less than a preset success rate by utilizing a third monitoring thread to obtain a third monitoring result, wherein the transmission success rate is used to characterize a success proportion of the channel information during the transmission process;
wherein when the transmission success rate is less than the preset success rate, the third monitoring result is abnormal; and
when the transmission success rate is greater than or equal to the preset success rate, the third monitoring result is normal.

18. The method according to claim 14, wherein the monitoring the multiple pieces of channel information through the multiple monitoring threads and obtaining the multiple monitoring results corresponding to the multiple pieces of channel information, comprises:
when the channel information comprises a radio network signal measurement value, monitoring whether the radio network signal measurement value is less than a corresponding preset signal reference value by utilizing a fourth monitoring thread to obtain a fourth monitoring result, wherein the radio network signal measurement value is used to characterize a radio network signal quality magnitude of the current data channel, and the radio network signal measurement value comprises at least one of: reference signal received power, reference signal receiving quality, a received signal strength indicator, and a signal to interference plus noise ratio;
wherein when the radio network signal measurement value is less than the corresponding preset signal reference value, the fourth monitoring result is abnormal; and
when the radio network signal measurement value is greater than or equal to the corresponding preset signal reference value, the fourth monitoring result is normal.

19. The method according to claim 13, wherein the switching the current data channel to the backup data channel comprises:
notifying the host computer system of interrupting data connection with the server, and switching the current data channel to the backup data channel.

20. The method according to claim 19, wherein the notifying the host computer system of interrupting data connection with the server comprises:
creating a control channel with the host computer system, the control channel being used to transmit instruction information to the host computer system; and
transmitting the instruction information to the host computer system through the control channel, the instruction information being used to instruct the host computer system to interrupt the data connection with the server.

21. A data transmission apparatus for a multi-channel network, comprising:
a second creation unit configured for creating radio bearer links individually based on a preset quantity of subscriber identity modules; wherein each of the subscriber identity modules corresponds to one of the radio bearer links;
a second allocation unit configured for allocating to-be-sent data to a corresponding radio bearer link according to a service type of the to-be-sent data, and acquiring a real-time bearer bandwidth of each of the radio bearer links;
a second decision unit configured for determining whether to execute data distribution based on the real-time bearer bandwidth of each of the radio bearer links and a preset distributing condition respectively; and
an adjustment unit configured for dynamically adjusting a target radio bearer link according to the real-time bearer bandwidth of each of the radio bearer links in response to deciding to execute data distribution.

22. A data transmission system for a dual-channel network, comprising a baseband, at least one host computer, and a switch, wherein,
the host computer is configured for generating to-be-sent data and transmitting the to-be-sent data to the switch, wherein the to-be-sent data is generated by applications in the host computer;
the switch is configured for receiving the to-be-sent data sent from the host computer and transmitting the to-be-sent data to the baseband; and
the baseband is configured for: receiving the to-be-sent data sent from the switch, and determining a target radio bearer link for transmitting the to-be-sent data according to a type identifier of the to-be-sent data and a preset forwarding strategy, wherein a corresponding relationship between the type identifier and radio bearer links is recorded in the preset forwarding strategy, and the radio bearer links comprise two radio bearer links in the dual-channel network; and transmitting the to-be-sent data to a corresponding target address based on the target radio bearer link.

23. A data channel switching apparatus, comprising:
an acquisition module configured for acquiring multiple pieces of channel information of a current data channel, wherein the current data channel is a channel that is currently used for data communication between a host computer system and a server;
a monitoring module configured for monitoring the multiple pieces of channel information based on an abnormal state detection strategy, and obtaining multiple monitoring results corresponding to the multiple pieces of channel information, wherein the abnormal state detection strategy comprises at least one abnormal state detection strategy for network layer data transmission and at least one abnormal state detection strategy for radio network signal quality;
a first decision module configured for deciding that a communication state of the current data channel is abnormal in response to a preset quantity of monitoring results among the multiple monitoring results being abnormal; and
a switching module configured for switching the current data channel to a backup data channel in response to the communication state of the current data channel being abnormal, wherein the backup data channel is a channel between the host computer system and the server for which data communication is to be established.

24. A vehicle, comprising the data transmission apparatus for a multi-channel network according to claim 21, or the data channel switching apparatus according to claim 23.

25. A computer-readable storage medium having a computer program stored thereon, wherein the computer program, when executed by a processor, implements the method according to any one of claims 1 to 20.

26. An electronic device, comprising a storage medium, a processor, and a computer program stored on the storage medium and runnable on the processor, wherein the processor, when executing the computer program, implements the method according to any one of claims 1 to 20.

27. A computer program product, comprising a computer program, wherein the computer program, when executed by a processor, implements the method according to any one of claims 1 to 20.
